# EUROPEAN PATENT APPLICATION

(11) **EP 3 952 135 A1**
(43) Date of publication of application: **09.02.2022**
(21) Application number: 21189959.6
(22) Date of filing: 05.08.2021
(51) Int. Cl.: H04B 7/155

(54) **PARALLEL FILTERING FOR POWER DISTRIBUTION AND ISOLATION**

(30) Priority: 06.08.2020 US 202063062274 P
(71) Applicant: Wilson Electronics, LLC, St. George, UT 84790 (US)
(72) Inventor: ASHWORTH, Christopher Ken, Toquerville, 84774 (US); ANDERSON, Dale Robert, Colleyville, 76034 (US); NORDGRAN, Casey James, Ivins, 84738 (US)
(74) Representative: ip21 Ltd

(57) **Abstract**

A technology is described for a repeater having a Fourier Transform Matrix (FTM). The repeater can comprise a first set of N M-plexers having M ports on a first side of each of the first set of the N M-plexers and a single port on a second side of each of the first set of the N M-plexers; a first set of M N by N (NxN) FTMs, with each of the M FTMs in the first set having N first side ports and N second side ports; and a first inverse NxN FTM comprising N first side ports and N second side ports; an antenna port coupled to a Pth port of a second side of the first inverse NxN FTM; and a signal port at the Pth port of a first side of each of the M NxN FTMs in the first set.

## Description

### BACKGROUND

Wireless communication systems, such as cellular telephone systems, have become common throughout the world. A signal booster or wireless repeater can be used to increase the quality of wireless communication between a wireless device and a wireless communication access point, such as a cell tower. The wireless repeater can improve the quality of the wireless communication by amplifying, filtering, and/or applying other processing techniques to uplink and downlink signals communicated between the wireless device and the wireless communication access point. The uplink is generally referred to as the communication direction from one or more wireless user devices to a base station. The downlink is generally referred to as the communication direction from the base station to the wireless user device. For a wireless telephone system, the base station may be a cell tower or a wireless communication access point, and the wireless user device may be one or more smart phones, one or more tablets, one or more laptops, one or more desktop computers, one or more multimedia devices such as televisions or gaming systems, one or more cellular internet of things (CloT) devices, and/or other types of computing devices typically referred to as user equipment (UEs).

As an example, the wireless repeater or signal booster can receive, via an antenna, downlink signals from the base station. The wireless repeater or signal booster can receive and amplify the downlink signal and then provide an amplified downlink signal to the wireless device. In other words, the wireless repeater or signal booster can act as a relay between the wireless device and the wireless communication access point. As a result, the wireless device can receive a stronger signal from the wireless communication access point. Similarly, uplink signals from the wireless device (e.g., telephone calls and other data) can be directed to the wireless repeater or signal booster. The wireless repeater or signal booster can receive and amplify the uplink signals before communicating, via an antenna, the uplink signals to the base station.

### SUMMARY OF THE INVENTION

In a first broad independent aspect, the invention provides a repeater having Fourier Transform Matrix (FTM) combined filters, the repeater comprising:
a first set of N M-plexers having M ports on a first side of each of the first set of the N M-plexers and a single port on a second side of each of the first set of the N M-plexers, where N is a positive integer and M is a positive integer;
a first set of M N by N (NxN) FTMs, with each of the M FTMs in the first set having N first side ports and N second side ports, wherein:
   the N second side ports of a first NxN FTM of the first set are connected to a first selected port of the first side of each of the first set of the N M-plexers, respectively;
   the N second side ports of a second NxN FTM of the first set are connected to a second selected port of the first side of each of the first set of the N M-plexers, respectively;
   the N second side ports of a Mth NxN FTM of the first set are connected to an Mth selected port of the first side of each of the first set of the N M-plexers, respectively;
a first inverse NxN FTM comprising N first side ports and N second side ports, wherein a single port of the second side of each of the first set of the N M-plexers is connected to one of the N second side ports of the first inverse NxN FTM;
an antenna port coupled to a Pth port of a first side of the first inverse NxN FTM, wherein P is an integer from 1 to N, wherein the antenna port is configured to communicate, via an antenna, M signals, with each of the M signals having a first direction or a second direction; and
a signal port at the Pth port of a first side of each of the M NxN FTMs in the first set, wherein the signal port is configured to communicate one of the M signals in the first direction or the second direction.

In a subsidiary aspect in accordance with any previous or subsequent aspect, the first direction is an uplink signal or the second direction is a downlink signal.

In a subsidiary aspect in accordance with any previous or subsequent aspect, the repeater further comprises
M first direction signal chains coupled to the signal port at the Pth port of the first side of each of the M NxN FTMs in the first set, respectively; or
M second direction signal chains coupled to the signal port at the Pth port of the first side of each of each of the M NxN FTMs in the first set, respectively.

In a subsidiary aspect in accordance with any previous or subsequent aspect, the M first direction signal chains and the M second direction signal chains further comprise one or more of:
a low noise amplifier (LNA);
a variable attenuator;
a power amplifier (PA);
a circulator; and
a band-pass filter configured for one of the M signals in a first direction or a second direction.

In a subsidiary aspect in accordance with any previous or subsequent aspect, the repeater further comprises:
a second set of N M-plexers having M ports on a first side of each of the second set of N M-plexers and a single port on a second side of each of the second set of N M-plexers;
a second set of M N by N (NxN) FTMs, with each of the M FTMs having N first side ports and N second side ports, wherein:
   the N second side ports of a first NxN FTM in the second set are connected to a first selected port of the first side of each of the second set of N M-plexers, respectively;
   the N second side ports of a second NxN FTM in the second set are connected to a second selected port of the first side of each of the second set of N M-plexers, respectively;
   the N second side ports of a Mth NxN FTM in the second set are connected to an Mth selected port of the first side of each of the second set of N M-plexers, respectively;
a second inverse NxN FTM comprising N first side ports and N second side ports, wherein the single port of the second side of each of the second set of N M-plexers is connected to one of the N second side ports of the second inverse NxN FTM;
a second antenna port coupled to a Rth port of a first side of the second inverse NxN FTM, wherein R is an integer from 1 to N, wherein the second antenna port is configured to communicate, via a second antenna, the M signals; and
a signal port at the Rth port of a first side of each of the second set of M NxN FTMs, wherein the signal port is configured to communicate one of the M signals in the first direction or the second direction.

In a subsidiary aspect in accordance with any previous or subsequent aspect, the M first direction signal chains are coupled to the signal port at the Rth port of a first side each of each of the second set of M NxN FTMs, respectively; or
the M second direction signal chains are coupled to the signal port at the Rth port of the first side of each of each of the second set of the M NxN FTMs, respectively.

In a subsidiary aspect in accordance with any previous or subsequent aspect, the remaining ports of the N ports of the first side of the first set of M NxN FTMs are terminated with a system impedance.

In a subsidiary aspect in accordance with any previous or subsequent aspect, the remaining ports of the N ports of the second side of the first inverse NxN FTM are terminated with a system impedance.

In a subsidiary aspect in accordance with any previous or subsequent aspect, the remaining ports of the N ports of the first side of the second set of M NxN FTMs are terminated with a system impedance.

In a subsidiary aspect in accordance with any previous or subsequent aspect, the remaining ports of the N ports of the second side of the second inverse NxN FTM are terminated with a system impedance.

In a subsidiary aspect in accordance with any previous or subsequent aspect, the repeater comprises N=3.

In a subsidiary aspect in accordance with any previous or subsequent aspect, a voltage transfer function for N=3 for the first set of M NxN FTMs and the first inverse NxN FTM, for the first direction is: $- \frac{1}{\sqrt{3}} B ∗ K \frac{1}{\sqrt{3}} {B}^{- 1} \left(\begin{matrix}V_UL \\ 0 \\ 0\end{matrix}\right) = \left(\begin{matrix}V_donor \\ V_isolated \\ V_isolated\end{matrix}\right)$ wherein B is $\left[\begin{matrix}{/ - 120}_{̲} & {/ - 150}_{̲} & {/ - 180}_{̲} \\ {/ - 150}_{̲} & {/ 60}_{̲} & {/ - 90}_{̲} \\ {/ - 180}_{̲} & {/ - 90}_{̲} & {/ 0}_{̲}\end{matrix}\right]$ for each of the first set of M N x N FTMs, **B⁻¹** is $\left[\begin{matrix}{/ 0}_{̲} & {/ - 90}_{̲} & {/ - 180}_{̲} \\ {/ - 90}_{̲} & {/ 60}_{̲} & {/ - 150}_{̲} \\ {/ - 180}_{̲} & {/ - 150}_{̲} & {/ - 120}_{̲}\end{matrix}\right]$ for the first inverse NxN FTM, K is a complex gain for all paths in the first inverse NxN FTM, V_UL is a voltage at the signal port at the Pth port of the first side of each of the M NxN FTMs in the first set, and V_donor is a voltage at the Pth port of the second side of the first inverse NxN FTM, and V_isolated is a voltage at the remaining ports of the second side of the first inverse NxN FTM.

In a subsidiary aspect in accordance with any previous or subsequent aspect, a voltage transfer function for N=3 for the second set of M NxN FTMs and the second inverse NxN FTM, for the second direction is: $- \frac{1}{\sqrt{3}} B ∗ K \frac{1}{\sqrt{3}} {B}^{- 1} \left(\begin{matrix}V_UL \\ 0 \\ 0\end{matrix}\right) = \left(\begin{matrix}V_donor \\ V_isolated \\ V_isolated\end{matrix}\right)$ wherein B is $\left[\begin{matrix}{/ - 120}_{̲} & {/ - 150}_{̲} & {/ - 180}_{̲} \\ {/ - 150}_{̲} & {/ 60}_{̲} & {/ - 90}_{̲} \\ {/ - 180}_{̲} & {/ - 90}_{̲} & {/ 0}_{̲}\end{matrix}\right]$ for each of the second set of M N x N FTMs, **B⁻¹** is $\left[\begin{matrix}{/ 0}_{̲} & {/ - 90}_{̲} & {/ - 180}_{̲} \\ {/ - 90}_{̲} & {/ 60}_{̲} & {/ - 150}_{̲} \\ {/ - 180}_{̲} & {/ - 150}_{̲} & {/ - 120}_{̲}\end{matrix}\right]$ for the second inverse NxN FTM, K is a complex gain for all paths in the second inverse NxN FTM, V_DL is a voltage at the the signal port at the Rth port of the first side of each of the second set of M NxN FTMs, and V_donor is a voltage at the Rth port of the second side of the second inverse NxN FTM, and V_isolated is a voltage at the remaining ports of the second side of the second inverse NxN FTM.

In a subsidiary aspect in accordance with any one of the preceding aspects or the subsequent aspects, N = 2 and a voltage transfer function for N=2 for the first set of M NxN FTMs and the first inverse NxN FTM, for the first direction is: $- \frac{1}{\sqrt{2}} B ∗ K \frac{1}{\sqrt{2}} {B}^{- 1} \left(\begin{matrix}V_UL \\ 0\end{matrix}\right) = \left(\begin{matrix}V_donor \\ V_isolated\end{matrix}\right) ,$ wherein B is $\left[\begin{matrix}j & 1 \\ 1 & j\end{matrix}\right]$ for each of the second set of M N x N FTMs, **B⁻¹** is $\left[\begin{matrix}j & - 1 \\ - 1 & j\end{matrix}\right]$ for the second inverse NxN FTM, j is equal to $\sqrt{- 1} ,$ K is a complex gain for all paths in the first inverse NxN FTM, V_UL is a voltage at the signal port at the Pth port of the first side of each of the M NxN FTMs in the first set, and V_donor is a voltage at the Pth port of the second side of the first inverse NxN FTM, and V_isolated is a voltage at the remaining ports of the second side of the first inverse NxN FTM.

In a subsidiary aspect in accordance with any of the preceding or subsequent aspects, a voltage transfer function for N=2 for the second set of M NxN FTMs and the second inverse NxN FTM, for the second direction is: $- \frac{1}{\sqrt{2}} B ∗ K \frac{1}{\sqrt{2}} {B}^{- 1} \left(\begin{matrix}V_UL \\ 0\end{matrix}\right) = \left(\begin{matrix}V_donor \\ V_isolated\end{matrix}\right) ,$ wherein B is $\left[\begin{matrix}j & 1 \\ 1 & j\end{matrix}\right]$ for each of the second set of MN x N FTMs, **B⁻¹** is $\left[\begin{matrix}j & - 1 \\ - 1 & j\end{matrix}\right]$ for the second inverse NxN FTM, j is equal to $\sqrt{- 1} ,$ K is a complex gain for all paths in the second inverse NxN FTM, V_DL is a voltage at the the signal port at the Rth port of the first side of each of the second set of M NxN FTMs, and V_donor is a voltage at the Rth port of the second side of the second inverse NxN FTM, and V_isolated is a voltage at the remaining ports of the second side of the second inverse NxN FTM.

In a further broad aspect, the repeater has a Fourier Transform Matrix (FTM), the repeater comprising:
a first set of 3 M-plexers having M ports on a first side of each of the first set of the 3 M-plexers and a single port on a second side of each of the first set of the 3 M-plexers, where M is a positive integer;
a first set of M 3 by 3 (3x3) FTMs, with each of the M FTMs in the first set having 3 first side ports and 3 second side ports, wherein:
   the 3 second side ports of a first 3x3 FTM of the first set are connected to a first selected port of the first side of each of the first set of the N M-plexers, respectively;
   the 3 second side ports of a second 3x3 FTM of the first set are connected to a second selected port of the first side of each of the first set of the 3 M-plexers, respectively;
   the 3 second side ports of a Mth 3x3 FTM of the first set are connected to an Mth selected port of the first side of each of the first set of the 3 M-plexers, respectively;
a first inverse 3x3 FTM comprising 3 first side ports and 3 second side ports, wherein a single port of the second side of each of the first set of the 3 M-plexers is connected to one of the 3 second side ports of the first inverse 3x3 FTM;
an antenna port coupled to a Pth port of a second side of the first inverse 3x3 FTM, wherein P is an integer from 1 to 3, wherein the antenna port is configured to communicate, with an antenna, M signals, with each of the M signals having a first direction or a second direction; and
a signal port at the Pth port of a first side of each of the M 3x3 FTMs in the first set, wherein the signal port is configured to communicate one of the M signals in the first direction or the second direction.

In a subsidiary aspect in accordance with any of the preceding or subsequent aspects, the first direction is an uplink signal or the second direction is a downlink signal.

In a subsidiary aspect in accordance with any of the preceding or subsequent aspects, further comprising:
M first direction signal chains coupled to the signal port at the Pth port of the first side each of each of the M 3x3 FTMs in the first set, respectively; or
M second direction signal chains coupled to the signal port at the Pth port of the first side of each of each of the M 3x3 FTMs in the first set, respectively.

In a subsidiary aspect in accordance with any of the preceding or subsequent aspects, the M first direction signal chains and the M second direction signal chains further comprise one or more of:
a low noise amplifier (LNA);
a variable attenuator;
a power amplifier (PA);
a circulator; and
a band-pass filter configured for one of the M signals in a first direction or a second direction.

In a subsidiary aspect in accordance with any of the preceding or subsequent aspects, the repeater further comprises:
a second set of 3 M-plexers having M ports on a first side of each of the second set of N M-plexers and a single port on a second side of each of the second set of N M-plexers;
a second set of M 3 by 3 (3x3) FTMs, with each of the M FTMs having 3 first side ports and 3 second side ports, wherein:
   the 3 second side ports of a first 3x3 FTM in the second set are connected to a first selected port of the first side of each of the second set of 3 M-plexers, respectively;
   the 3 second side ports of a second 3x3 FTM in the second set are connected to a second selected port of the first side of each of the second set of 3 M-plexers, respectively;
   the 3 second side ports of a Mth 3x3 FTM in the second set are connected to an Mth selected port of the first side of each of the second set of 3 M-plexers, respectively;
a second inverse 3x3 FTM comprising 3 first side ports and 3 second side ports, wherein the single port of the second side of each of the second set of 3 M-plexers is connected to one of the 3 second side ports of the second inverse 3x3 FTM;
a second antenna port coupled to a Rth port of a second side of the second inverse 3x3 FTM, wherein R is an integer from 1 to 3, wherein the second antenna port is configured to communicate, with a second antenna, the M signals; and
a signal port at the Rth port of a first side of each of the second set of M 3x3 FTMs, wherein the signal port is configured to communicate one of the M signals in the first direction or the second direction.

In a subsidiary aspect in accordance with any of the preceding or subsequent aspects, the M first direction signal chains are coupled to the signal port at the Rth port of a first side each of each of the second set of M 3x3 FTMs, respectively; or
the M second direction signal chains are coupled to the signal port at the Rth port of the first side of each of each of the second set of the M 3x3 FTMs, respectively.

In a subsidiary aspect in accordance with any of the preceding or subsequent aspects, remaining ports of the 3 ports of:
the first side of the first set of M 3x3 FTMs are terminated with a system impedance;
second side of the first inverse 3x3 FTM are terminated with a system impedance;
the first side of the second set of M 3x3 FTMs are terminated with a system impedance; or
the second side of the second inverse 3x3 FTM are terminated with a system impedance.

In a subsidiary aspect in accordance with any of the preceding or subsequent aspects, a voltage transfer function for the first set of M 3x3 FTMs and the first inverse 3x3 FTM, for the first direction is: $- \frac{1}{\sqrt{3}} \left[\begin{matrix}{/ - 120}_{̲} & {/ - 150}_{̲} & {/ - 180}_{̲} \\ {/ - 150}_{̲} & {/ 60}_{̲} & {/ - 90}_{̲} \\ {/ - 180}_{̲} & {/ - 90}_{̲} & {/ 0}_{̲}\end{matrix}\right] ∗ K \frac{1}{\sqrt{3}} \left[\begin{matrix}{/ 0}_{̲} & {/ - 90}_{̲} & {/ - 180}_{̲} \\ {/ - 90}_{̲} & {/ 60}_{̲} & {/ - 150}_{̲} \\ {/ - 180}_{̲} & {/ - 150}_{̲} & {/ - 120}_{̲}\end{matrix}\right] \left(\begin{matrix}V_UL \\ 0 \\ 0\end{matrix}\right) = \left(\begin{matrix}V_donor \\ V_isolated \\ V_isolated\end{matrix}\right)$ wherein K is a complex gain for all paths in the first inverse 3x3 FTM, V_UL is a voltage at the signal port at the Pth port of the first side of each of the M 3x3 FTMs in the first set, and V_donor is a voltage at the Pth port of the second side of the first inverse 3x3 FTM, and V_isolated is a voltage at the remaining ports of the second side of the first inverse 3x3 FTM.

In a subsidiary aspect in accordance with any of the preceding or subsequent aspects, a voltage transfer function for the second set of M 3x3 FTMs and the second inverse 3x3 FTM, for the second direction is: $- \frac{1}{\sqrt{3}} \left[\begin{matrix}{/ - 120}_{̲} & {/ - 150}_{̲} & {/ - 180}_{̲} \\ {/ - 150}_{̲} & {/ 60}_{̲} & {/ - 90}_{̲} \\ {/ - 180}_{̲} & {/ - 90}_{̲} & {/ 0}_{̲}\end{matrix}\right] ∗ K \frac{1}{\sqrt{3}} \left[\begin{matrix}{/ 0}_{̲} & {/ - 90}_{̲} & {/ - 180}_{̲} \\ {/ - 90}_{̲} & {/ 60}_{̲} & {/ - 150}_{̲} \\ {/ - 180}_{̲} & {/ - 150}_{̲} & {/ - 120}_{̲}\end{matrix}\right] \left(\begin{matrix}V_UL \\ 0 \\ 0\end{matrix}\right) = \left(\begin{matrix}V_donor \\ V_isolated \\ V_isolated\end{matrix}\right)$ wherein K is a complex gain for all paths in the second inverse 3x3 FTM, V_DL is a voltage at the the signal port at the Rth port of the first side of each of the second set of M 3x3 FTMs, and V_donor is a voltage at the Rth port of the second side of the second inverse 3x3 FTM, and V_isolated is a voltage at the remaining ports of the second side of the second inverse 3x3 FTM.

In a subsidiary aspect in accordance with any of the preceding or subsequent aspects, a repeater having a Fourier Transform Matrix (FTM), the repeater comprising:
a first set of 2 M-plexers having M ports on a first side of each of the first set of the 2 M-plexers and a single port on a second side of each of the first set of the 2 M-plexers, where M is a positive integer;
a first set of M 2 by 2 (2x2) FTMs, with each of the M FTMs in the first set having 2 first side ports and 2 second side ports, wherein:
   the 2 second side ports of a first 2x2 FTM of the first set are connected to a first selected port of the first side of each of the first set of the N M-plexers, respectively;
   the 2 second side ports of a second 2x2 FTM of the first set are connected to a second selected port of the first side of each of the first set of the 2 M-plexers, respectively;
   the 2 second side ports of a Mth 2x2 FTM of the first set are connected to an Mth selected port of the first side of each of the first set of the 2 M-plexers, respectively;
a first inverse 2x2 FTM comprising 2 first side ports and 2 second side ports, wherein a single port of the second side of each of the first set of the 2 M-plexers is connected to one of the 2 second side ports of the first inverse 2x2 FTM;
an antenna port coupled to a Pth port of a second side of the first inverse 2x2 FTM, wherein P is an integer from 1 to 2, wherein the antenna port is configured to communicate, with an antenna, M signals, with each of the M signals having a first direction or a second direction; and
a signal port at the Pth port of a first side of each of the M 2x2 FTMs in the first set, wherein the signal port is configured to communicate one of the M signals in the first direction or the second direction.

In a subsidiary aspect in accordance with any of the preceding or subsequent aspects, the first direction is an uplink signal or the second direction is a downlink signal.

In a subsidiary aspect in accordance with any of the preceding or subsequent aspects, the repeater further comprises:
M first direction signal chains coupled to the signal port at the Pth port of the first side each of each of the M 2x2 FTMs in the first set, respectively; or
M second direction signal chains coupled to the signal port at the Pth port of the first side of each of each of the M 2x2 FTMs in the first set, respectively.

In a subsidiary aspect in accordance with any of the preceding or subsequent aspects, the M first direction signal chains and the M second direction signal chains further comprise one or more of:
a low noise amplifier (LNA);
a variable attenuator;
a power amplifier (PA);
a circulator; or
a band-pass filter configured for one of the M signals in a first direction or a second direction.

In a subsidiary aspect in accordance with any of the preceding or subsequent aspects, the repeater further comprising:
a second set of 2 M-plexers having M ports on a first side of each of the second set of N M-plexers and a single port on a second side of each of the second set of N M-plexers;
a second set of M 2 by 2 (2x2) FTMs, with each of the M FTMs having 2 first side ports and 2 second side ports, wherein:
   the 2 second side ports of a first 2x2 FTM in the second set are connected to a first selected port of the first side of each of the second set of 2 M-plexers, respectively;
   the 2 second side ports of a second 2x2 FTM in the second set are connected to a second selected port of the first side of each of the second set of 2 M-plexers, respectively;
   the 2 second side ports of a Mth 2x2 FTM in the second set are connected to an Mth selected port of the first side of each of the second set of 2 M-plexers, respectively;
a second inverse 2x2 FTM comprising 2 first side ports and 2 second side ports, wherein the single port of the second side of each of the second set of 2 M-plexers is connected to one of the 2 second side ports of the second inverse 2x2 FTM;
a second antenna port coupled to a Rth port of a second side of the second inverse 2x2 FTM, wherein R is an integer from 1 to 2, wherein the second antenna port is configured to communicate, with a second antenna, the M signals; and
a signal port at the Rth port of a first side of each of the second set of M 2x2 FTMs, wherein the signal port is configured to communicate one of the M signals in the first direction or the second direction.

In a subsidiary aspect in accordance with any of the preceding or subsequent aspects,
the M first direction signal chains are coupled to the signal port at the Rth port of a first side each of each of the second set of M 2x2 FTMs, respectively; or
the M second direction signal chains are coupled to the signal port at the Rth port of the first side of each of each of the second set of the M 2x2 FTMs, respectively.

In a subsidiary aspect in accordance with any of the preceding or subsequent aspects, the remaining ports of the 2 ports of:
the first side of the first set of M 2x2 FTMs are terminated with a system impedance;
second side of the first inverse 2x2 FTM are terminated with a system impedance;
the first side of the second set of M 2x2 FTMs are terminated with a system impedance; or
the second side of the second inverse 2x2 FTM are terminated with a system impedance.

In a subsidiary aspect in accordance with any of the preceding or subsequent aspects, a voltage transfer function for the first set of M 2x2 FTMs and the first inverse 2x2 FTM, for the first direction is: $- \frac{1}{\sqrt{2}} \left[\begin{matrix}j & 1 \\ 1 & j\end{matrix}\right] ∗ K \frac{1}{2} \left[\begin{matrix}j & - 1 \\ - 1 & j\end{matrix}\right] \left(\begin{matrix}V_UL \\ 0\end{matrix}\right) = \left(\begin{matrix}V_donor \\ V_isolated\end{matrix}\right)$ wherein K is a complex gain for all paths in the first inverse 2x2 FTM, V_UL is a voltage at the signal port at the Pth port of the first side of each of the M 2x2 FTMs in the first set, and V_donor is a voltage at the Pth port of the second side of the first inverse 2x2 FTM, and V_isolated is a voltage at the remaining ports of the second side of the first inverse 2x2 FTM.

In a subsidiary aspect in accordance with any of the preceding or subsequent aspects, a voltage transfer function for the second set of M 2x2 FTMs and the second inverse 2x2 FTM, for the second direction is: $- \frac{1}{\sqrt{2}} \left[\begin{matrix}j & 1 \\ 1 & j\end{matrix}\right] ∗ K \frac{1}{2} \left[\begin{matrix}j & - 1 \\ - 1 & j\end{matrix}\right] \left(\begin{matrix}V_UL \\ 0\end{matrix}\right) = \left(\begin{matrix}V_donor \\ V_isolated\end{matrix}\right)$ wherein K is a complex gain for all paths in the second inverse 2x2 FTM, V_DL is a voltage at the the signal port at the Rth port of the first side of each of the second set of M 2x2 FTMs, and V_donor is a voltage at the Rth port of the second side of the second inverse 2x2 FTM, and V_isolated is a voltage at the remaining ports of the second side of the second inverse 2x2 FTM.

### DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1a illustrates a signal booster, in accordance with an example;
FIG. 1b illustrates a repeater in communication with a user equipment (UE) and a base station (BS) in accordance with an example;
FIG. 2 illustrates a power distribution system with filters, in accordance with an example;
FIG. 3 illustrates a power distribution system with parallel power amplifiers (PA) and filters, in accordance with an example;
FIG. 4a illustrates a chart of combined transfer (Tx) and receive (Rx) paths with a single duplexer, in accordance with an example;
FIG. 4b illustrates a graph showing the Tx and Rx gain and mid-band isolation with a 90 degree hybrid combined duplexer topology, in accordance with an example;
FIG. 5 illustrates a block diagram with parallel power amplifiers (PAs) and filters for B12/B13, in accordance with an example;
FIG. 6 illustrates a block diagram of a topology for hybrid combining of two parallel m+n-plexers, in accordance with an example;
FIG. 7 illustrates an NxN Fourier Transform Matrix (FTM) cascaded with its inverse matrix to form an FTM system, in accordance with an example;
FIG. 8a illustrates an example of a more detailed illustration of the topology of FIG. 7, using a 2 x 2 FTM matrix to split a signal into two paths, and a 2 x 2 inverse FTM matrix to combine the split signal, in accordance with an example;
FIG. 8b illustrates a 2x2 FTM system combining 2 duplexers, in accordance with an example;
FIG. 9a illustrates a 3x3 FTM system combining 3 duplexers, in accordance with an example;
FIG. 9b illustrates 3x3 Fourier transform matrices used in combining of 3 duplexers, in accordance with an example;
FIG. 10a illustrates a Fourier transform matrix (FTM) of 3 duplexers onto a single donor port, in accordance with an example;
FIG. 10b illustrates a 3x3 FTM Duplexer Combiner system in accordance with an example;
FIG. 10c illustrates a 3x3 FTM combining of 3 duplexers onto single donor port in accordance with an example;
FIG. 11 illustrates a 3x3 FTM 2-path booster, in accordance with an example;
FIG. 12 illustrates an NxN FTM M-path booster, in accordance with an example;
FIG. 13 illustrates a handheld booster in communication with a wireless device in accordance with an example;
FIG. 14 illustrates a user equipment (UE) in accordance with an example;

Reference will now be made to the exemplary embodiments illustrated, and specific language will be used herein to describe the same. It will nevertheless be understood that no limitation of the scope of the invention is thereby intended.

### DETAILED DESCRIPTION

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating steps and operations and do not necessarily indicate a particular order or sequence.

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

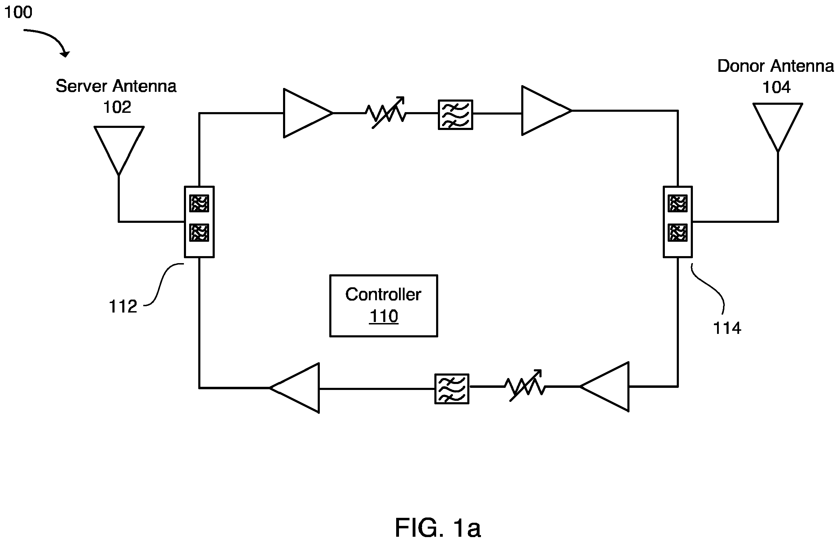

In an example, as illustrated in FIG. 1a, a bi-directional repeater system can comprise a repeater 100 connected to an outside antenna 104 or donor antenna 104 and an inside antenna 102 or server antenna 102. The repeater 100 can include a donor antenna port that can be internally coupled to a second duplexer (or diplexer or multiplexer or circulator or splitter) 114. The repeater 100 can include a server antenna port that can also be coupled to a first duplexer (or diplexer or multiplexer or circulator or splitter) 112. Between the two duplexers, 114 and 112, can be two paths: a first amplification and filtering path and a second amplification and filtering path. The first amplification and filtering path can comprise a low noise amplifier (LNA) with an input coupled to the first duplexer 112, a variable attenuator coupled to an output of the LNA, a filter coupled to the variable attenuator, and a power amplifier (PA) coupled between the filter and the second duplexer 114. The LNA can amplify a lower power signal without degrading the signal to noise ratio. The PA can adjust and amplify the power level by a desired amount. A second amplification and filtering path can comprise an LNA with an input coupled to the second duplexer 114, a variable attenuator coupled to an output of the LNA, a filter coupled to the variable attenuator, and a PA coupled between the filter and the first duplexer 112. The first amplification and filtering path can be a downlink amplification and filtering path or an uplink amplification and filtering path. The second amplification and filtering path can be an uplink amplification and filtering path or a downlink amplification and filtering path. The repeater 100 can also comprise a controller 110. In one example, the controller 110 can include one or more processors and memory.

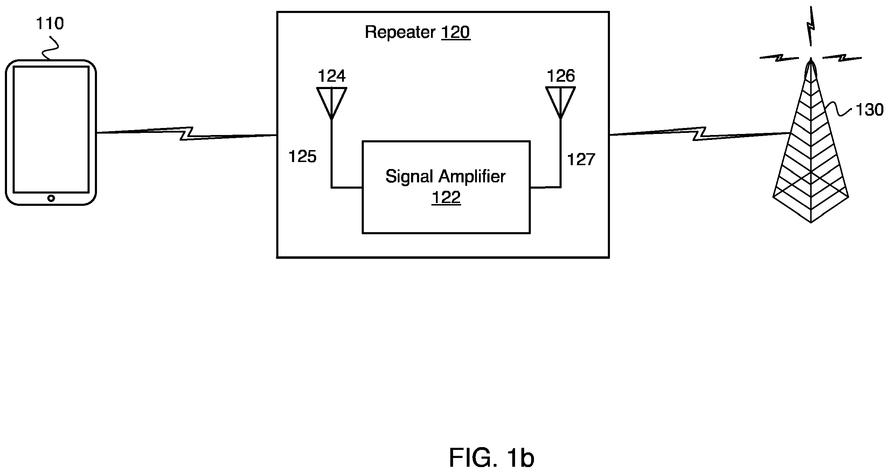

FIG. 1b illustrates an exemplary repeater 120 in communication with a wireless device 110 and a base station 130. The repeater 120 (also referred to as a cellular signal amplifier or signal booster) can improve the quality of wireless communication by amplifying, filtering, and/or applying other processing techniques via a signal amplifier 122 to uplink signals communicated from the wireless device 110 to the base station 130 and/or downlink signals communicated from the base station 130 to the wireless device 110. In other words, the repeater 120 can amplify or boost uplink signals and/or downlink signals bi-directionally. In one example, the repeater 120 can be at a fixed location, such as in a home or office. Alternatively, the repeater 120 can be attached to a mobile object, such as a vehicle or a wireless device 110. The repeater can be a signal booster, such as a cellular signal booster.

In one configuration, the repeater 120 can be configured to be connected to a device antenna 124 (e.g., an inside antenna, server antenna, or a coupling antenna) and a node antenna 126 (e.g., an outside antenna or donor antenna). The node antenna 126 can receive the downlink signal from the base station 130. The downlink signal can be provided to the signal amplifier 122 via a second coaxial cable 127 or other type of wired, wireless, optical, or radio frequency connection operable to communicate radio frequency signals. The signal amplifier 122 can include one or more radio signal amplifiers for amplification and filtering of cellular signals. The downlink signal that has been amplified and filtered can be provided to the device antenna 124 via a first coaxial cable 125 or other type of radio frequency connection operable to communicate radio frequency signals. The device antenna 124 can communicate the downlink signal that has been amplified and filtered to the wireless device 110.

Similarly, the device antenna 124 can receive an uplink signal from the wireless device 110. The uplink signal can be provided to the signal amplifier 122 via the first coaxial cable 125 or other type of wired, wireless, optical, or radio frequency connection operable to communicate radio frequency signals. The signal amplifier 122 can include one or more radio signal amplifiers for amplification and filtering of cellular signals. The uplink signal that has been amplified and filtered can be provided to the node antenna 126 via the second coaxial cable 127 or other type of wired, wireless, optical, or radio frequency connection operable to communicate radio frequency signals. The node antenna 126 can communicate the uplink signal that has been amplified and filtered to a node, such as base station 130.

In one embodiment, the device antenna 124 and the node antenna 126 can be integrated as part of the repeater 120. Alternatively, the repeater 120 can be configured to be connected to a separate device antenna 124 or node antenna 126. The device antenna and the node antenna may be provided by a different provider than the repeater 120.

In one example, the repeater 120 can send uplink signals to a node and/or receive downlink signals from the node. While FIG. 1b shows the node as a base station 130, this is not intended to be limiting. The node can comprise a wireless wide area network (WWAN) access point (AP), a base station (BS), an evolved Node B (eNB), a next generation Node B (gNB), a baseband unit (BBU), a remote radio head (RRH), a remote radio equipment (RRE), a relay station (RS), a radio equipment (RE), a remote radio unit (RRU), a central processing module (CPM), or another type of WWAN access point.

In one configuration, the repeater 120 used to amplify the uplink and/or a downlink signal can be a handheld booster. The handheld booster can be implemented in a sleeve of the wireless device 110. The wireless device sleeve may be attached to the wireless device 110, but may be removed as needed. In this configuration, the repeater 120 can automatically power down or cease amplification when the wireless device 110 approaches a particular base station. In other words, the repeater 120 may determine to stop performing signal amplification when the quality of uplink and/or downlink signals is above a defined threshold based on a location of the wireless device 110 in relation to the base station 130.

In one example, the repeater 120 can include a battery to provide power to various components, such as the signal amplifier 122, the device antenna 124, and the node antenna 126. The battery can also power the wireless device 110 (e.g., phone or tablet). Alternatively, the repeater 120 can receive power from the wireless device 110.

In one configuration, the repeater 120 can be a Federal Communications Commission (FCC)-compatible consumer repeater. As a non-limiting example, the repeater 120 can be compatible with FCC Part 20 or 47 Code of Federal Regulations (C.F.R.) Part 20.21 (March 21, 2013). In addition, the handheld booster can operate on the frequencies used for the provision of subscriber-based services under parts 22 (Cellular), 24 (Broadband PCS), 27 (AWS-1, 700 megahertz (MHz) Lower A-E Blocks, and 700 MHz Upper C Block), and 90 (Specialized Mobile Radio) of 47 C.F.R. The repeater 120 can be configured to automatically self-monitor its operation to ensure compliance with applicable noise and gain limits. The repeater 120 can either self-correct or shut down automatically if the repeater's operations violate the regulations defined in 47 CFR Part 20.21. While a repeater that is compatible with FCC regulations is provided as an example, it is not intended to be limiting. The repeater can be configured to be compatible with other governmental regulations based on the location where the repeater is configured to operate.

In one configuration, the repeater 120 can be a Federal Communications Commission (FCC)-compatible consumer repeater. As a non-limiting example, the repeater 120 can be compatible with FCC Part 20 or 47 Code of Federal Regulations (C.F.R.) Part 20.21 (March 21, 2013). In addition, the repeater 120 can operate on the frequencies used for the provision of subscriber-based services under parts 22 (Cellular), 24 (Broadband PCS), 27 (AWS-1, 700 MHz Lower A-E Blocks, and 700 MHz Upper C Block), and 90 (Specialized Mobile Radio) of 47 C.F.R. The repeater 120 can be configured to automatically self-monitor its operation to ensure compliance with applicable noise and gain limits. The repeater 120 can either self-correct or shut down automatically if the repeater's operations violate the regulations defined in FCC Part 20.21.

In one configuration, the repeater 120 can improve the wireless connection between the wireless device 110 and the base station 130 (e.g., cell tower) or another type of wireless wide area network (WWAN) access point (AP). The repeater 120 can boost signals for cellular standards, such as the Third Generation Partnership Project (3GPP) Long Term Evolution (LTE) Release 8, 9, 10, 11, 12, 13, 14, 15, or 16, 3GPP 5G Release 15 or 16, or Institute of Electronics and Electrical Engineers (IEEE) 802.16. In one configuration, the repeater 220 can boost signals for 3GPP LTE Release 16.0.0 (January 2019) or other desired releases. The repeater 120 can boost signals from the 3GPP Technical Specification (TS) 36.101 (Release 15 September 2017) bands or LTE frequency bands. For example, the repeater 120 can boost signals from the LTE frequency bands: 2, 4, 5, 12, 13, 17, 25, and 26. In addition, the repeater 120 can boost selected frequency bands based on the country or region in which the repeater is used, including any of bands 1-85 or other bands, as disclosed in 3GPP TS 36.104 V16.0.0 (January 2019).

In another configuration, the repeater 220 can boost signals from the 3GPP Technical Specification (TS) 38.104 (Release 15 January 2019) bands or 5G frequency bands. In addition, the repeater 220 can boost selected frequency bands based on the country or region in which the repeater is used, including any of bands n1 - n86, n257 - n261, or other bands, as disclosed in 3GPP TS 38.104 V15.4.0 (January 2019).

A typical architecture of a repeater can include the use of one or more surface acoustic wave (SAW) and bulk acoustic wave (BAW) filters that are implemented as a filter in an amplification and filtering path of the repeater. The implementation of these filters within a repeater system typically limits the maximum amount of radio frequency (RF) power that can travel through the amplification and filtering path. SAW and BAW filters can typically be used to filter signals with less than five watts, and often signals with less than one watt of power. In some examples, other types of filters, such as ceramic filters, can be used to filter signals with higher power levels. However, ceramic filters can be relatively large compared with SAW and BAW filters. In addition, ceramic filters are typically much more expensive than SAW and BAW filters.

Accordingly, in many embodiments, it would be valuable to be able to utilize SAW and BAW filters for higher power repeater systems. Implementation of SAW and BAW filters within higher power repeater systems can reduce the cost, and reduce the size of the system which further reduces Printed Circuit Board (PCB) costs, along with additional costs of manufacturing and shipping.

One way of addressing the challenge of using SAW and BAW filters in higher power repeater systems is to configure a hardware architecture that distributes RF power in an amplification and filtering path to parallel amplification and filtering paths, that each include one or more RF filters. For example, splitting an amplification and filtering path into two or more separate paths enables higher power signals to be split, filtered using SAW and BAW filters, and then recombined. However, splitting and recombining radio frequency transmission paths, such as the amplification and filtering paths in a repeater, can often lead to undesired effects on the signals. The undesired effects include, but are not limited to, signal loss and the introduction of spurs, reflections, and other types of noise in the signals.

In accordance with one example embodiment, an alternative architecture can be used that can allow an amplification and filtering path to be split into multiple amplification and filtering paths using a Fourier transform matrix (FTM) to split the amplification and filtering path into multiple transmission paths. The multiple transmission paths can then be recombined using an inverse FTM as a combiner to obtain an increase in the amount of RF power that a repeater can amplify using a SAW and/or BAW filters. The use of the FTM to split and combine transmission paths can limit the negative effects typically associated with splitting and combining an RF transmission line.

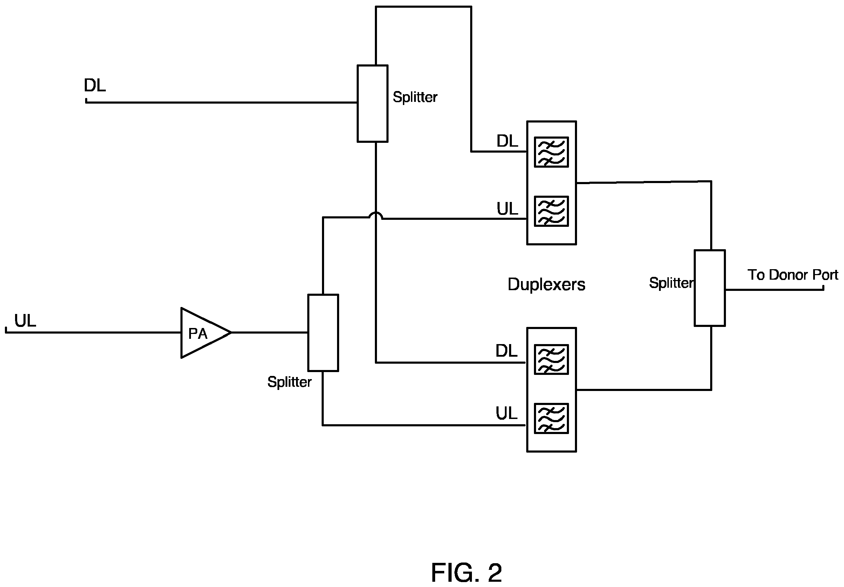

FIG. 2 is an example of a power distribution system with split transmission paths, each having filters. In this example, an uplink signal can be configured to be sent to a power amplifier (PA). The signal amplified by the PA is directed to a splitter that is communicatively coupled to the PA. Two transmission paths are generated from the amplified signal by the first splitter. The first path can comprise a first output port of the first splitter coupled to a first input port of a first duplexer/filter. The second path can comprise a second output port of the splitter coupled to a first input port of a second duplexer/filter. A downlink (DL) signal can also be configured to be sent to a second splitter with an output of two transmission paths. The first path can comprise a first output port of the second splitter coupled to a second input port of the first duplexer/filter. The second path can comprise a second output port of the second splitter coupled to a second input port of the second duplexer/filter. The output signals from the first and second duplexer/filter are coupled to a third splitter that is used as a combiner. The combined signal is directed to a donor port.

In order for the signals to be split and combined with minimal negative effects on the signals, in the example of FIG. 2, each of the split transmission paths can be configured with a similar length to allow the signals to recombine in phase. However, in most instances, relatively small differences in manufacturing can result in differences in phase through the duplexers and the transmission lines.

In addition, each passband filter in the duplexers is configured to substantially pass a signal in a certain band, while reflecting the signal outside of that band. This can result in a relatively high return loss outside of the pass band. This high return loss is seen at the power amplifier and can negatively affect both the amplification of the signal and the power amplifier itself. If some of the signal in the downlink path at the duplexers feeds into the uplink path at the duplexers, or vice versa, this can result in an oscillation. The oscillation can cause excessive voltage swings at the PA, and may result in damage to the PA. The differences in phase, poor voltage standing wave ratio (VSWR) in out of band frequencies at the PA, and potential oscillations can result in the combined signal at the donor port having spurs, reflections, and reduced power, as previously discussed.

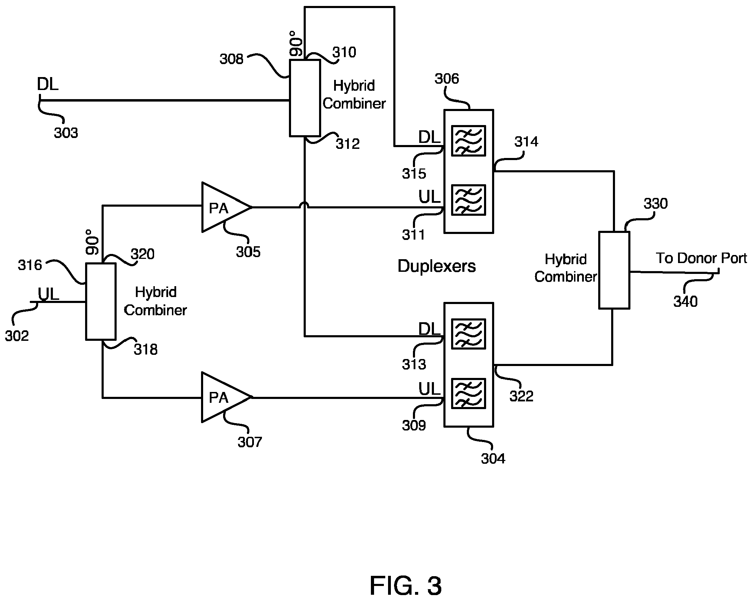

FIG. 3 illustrates a power distribution system with multiple transmission paths. Each transmission path can be split into two or more transmission paths using a splitter with a phase shifter. The output of each splitter can include at least one output that is phase shifted relative to the input signal. In this example, the splitter/combiner can be referred to as a hybrid combiner. The hybrid combiner is configured to shift the phase of one output of a split signal by 90 degrees relative to the other output of signal from the hybrid combiner. The phase shift of the hybrid combiners 308, 316 positioned before the duplexers 304, 306 allow for UL to DL path isolation which helps to reduce the risk of oscillation in a repeater. The phase shift also helps to improve the return loss looking into the UL port 302 and DL port 303 of the hybrid combiners 316, 308. The return loss is improved for both the UL and DL signal frequency ranges. The return loss is also improved outside of the UL and DL signal frequency ranges. The phase shift of the hybrid combiner 330 positioned after the duplexers 304, 306 enables a proper in-phase combining at the donor port 340.

In the example of FIG. 3, an uplink signal 302 can be directed to an input of a first hybrid combiner 316 via an input port of the hybrid combiner that can be configured to split the signal with a 90 degree phase shift for one output path 318 relative to the other output path 320. The first output path 318 of the first hybrid combiner 316 or splitter is communicatively coupled to a first PA 307 and a first port 309 of a first duplexer 304. The UL signal in the first output path 318 has a phase relative to the input signal 302 of zero degrees (i.e. the same phase as the UL input signal). The second output path 320 of the first hybrid combiner 316 or splitter can be communicatively coupled to a second PA 305 and a first input port 311 of a second duplexer 306. The UL signal in the second output path 320 has a phase relative to the UL input signal 302 of 90 degrees. Each filter in the duplexers 304, 306 is configured to receive approximately half of the input signal (UL or DL signal) power. The gain of each PA 305, 307 can be balanced so that the power of each signal output from a hybrid combiner on the paths 318 and 320 is substantially equal.

A downlink signal 303 can be directed to a second hybrid combiner 308 or splitter possessing a 90 degree phase shift for one output port 310 relative to the other output port 312. The first output port 312 of the second hybrid combiner or splitter is communicatively coupled to a second input port 313 of the first duplexer 304. The DL signal in the first output path 312 has a phase relative to the DL input signal 303 of zero degrees (i.e. the same phase as the DL input signal). The second output port 310 of the second hybrid combiner 308 or splitter is communicatively coupled to a second input port 315 of the second duplexer 306. The DL signal in the second output path 310 has a phase relative to the DL input signal of 90 degrees.

The split 90 degree UL signal on output port 320 from the first hybrid combiner 316 is directed to the second duplexer's 306 UL port 311. A small amount of the signal at the UL port 311 is leaked to the DL port 315 of the second duplexer 306 due to the inherent limitations in a typical duplexer. The leaked UL signal can travel to second output port 310 of the second hybrid combiner 308 and undergo another 90 degree phase shift, for a phase shift of 180 degrees relative to the input UL port 302 of the first hybrid combiner 316.

The in-phase UL signal from the first output path 318 of the first hybrid combiner 316 is directed 304 UL port 309. A small amount of the signal at the UL port 309 is leaked to the DL port 313 of the first duplexer 304. The leaked UL signal at the first duplexer's 304 DL port 313 is substantially identical in amplitude to the leaked UL signal appearing at the second duplexer's 306 DL port 315. The leaked UL signal from the first duplexer's DL port 315 can travel to the first output port 312 of the second hybrid's combiner 308 with a 0 degree phase shift. The total phase shift of the leaked signal of the first hybrid 316 is 0 degrees. Since both UL signals entering the second hybrid combiner's 308 0 degree and 90 degree ports 312, 310 are substantially equal in amplitude and different in phase by 180 degrees, both of the leaked UL signals substantially cancel out at the DL input 303 of the second hybrid combiner 308.

Accordingly, the topology illustrated in FIG. 3, using the second and first hybrid combiners 308, 316, provides extra isolation between the UL port 302 and the DL port 303. Theoretically, if the duplexers were identical and the hybrid combiners were perfectly split between 0 and 90 degrees on the UL input signal and were split 0 and 90 degrees on the DL input signal, there would be complete isolation between the UL input port 302 and the DL output port 303. However, even with manufacturing variations, differences in length of traces, and other non-conformities between the paths, there is still an addition of 10 to 25 dB of isolation.

The added isolation enabled by the anti-phased first hybrid combiner's 316 split UL signals at the second hybrid combiner's 308 DL port 303 is sufficient to reduce the amount of filtering that is performed in the repeater. The reduced filtering can further reduce costs in the repeater. In addition, the decreased amount of filtering can reduce the amount of ripple in the signal. Each additional filter, and/or pole in a filter can cause additional ripple in the signal. By reducing the filtering, the quality of the signal output by the repeater can be increased. The added isolation can also increase the amount of mid-band isolation for the UL/DL loop and reduce the risk of oscillation occurring.

In FIG. 3, consider the case where both PA devices 305, 307 located after the first hybrid combiner 316 on the UL paths 318, 320 are replaced with a single PA device driving the first hybrid combiner's UL input port 302, as depicted in FIG. 2. For out of band (OOB) reflections of the UL signal from the filters in the duplexers 304, 306, the voltage and current will reflect back to the first hybrid combiner 316. The first hybrid combiner 316 can include a fourth port that is terminated to ground (i.e. a 50 ohm termination). The voltage and current will constructively cancel out at the terminated port. Accordingly, the power that is reflected off of the duplexers 304, 306 due to poor VSWR can be absorbed by the hybrid combiner 316 and the PA at the input port 302 will have substantially no reflected signal. This allows the signal from the PA to be more accurate and even over the bandwidth, especially in OOB frequencies, and reduces the risk of damaging the PA.

**The** signal from the output port of the first duplexer is sent to an input of a third hybrid combiner with 90 degrees of phase shift. Both the UL signal and DL signal output from the second duplexer have already been shifted by 90 degrees, as previously discussed. The two signals are then in phase and can be recombined at the third hybrid combiner with minimal loss due to phase shift, to output the filtered, amplified signal at the donor port. In one example, the RF paths between hybrid combiners or splitters can be configured to be of substantially equal length so that signals can recombine correctly and substantially in-phase.

**The** repeater topology illustrated in FIG. 3 enables a signal with approximately twice the power to be filtered and amplified. The use of the hybrid combiners with the PAs located before the UL hybrid combiner minimizes signal reflection from the duplexers to the PAs. The phase shift in the split signals provides added isolation, decreasing the risk of oscillation, while enabling a lesser amount of filtering, thereby resulting in a signal with less ripple and better OOB performance.

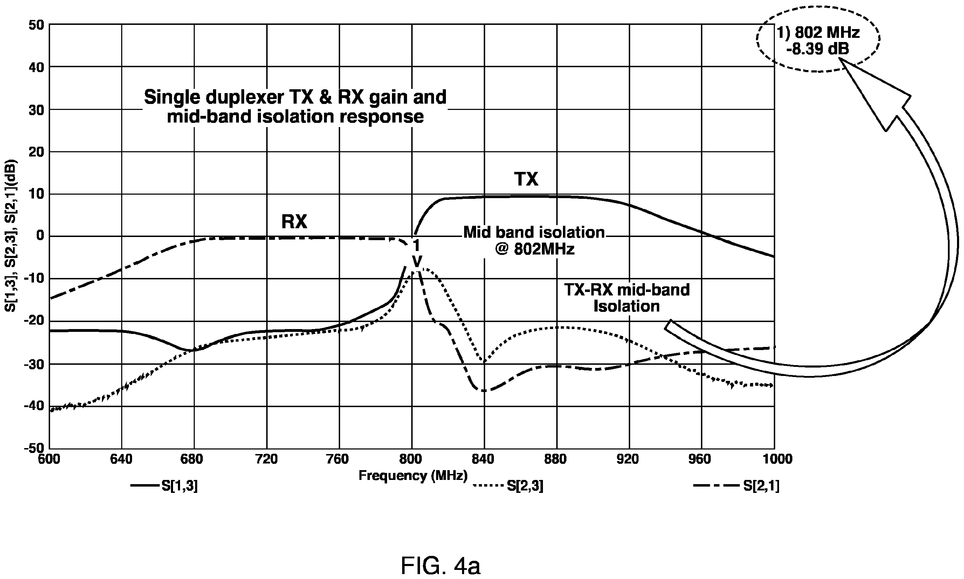

FIG. 4a illustrates a graph showing the transmit (Tx) and receive (Rx) gain and mid-band isolation with a single duplexer, the in-phase splitter topology illustrated in FIG. 2 will also give the same response. The graph shows a Band 12 / Band 13 signal duplexed with a Band 26 signal, with a mid-band isolation of approximately 8.4 dB at 802 Megahertz (MHz).

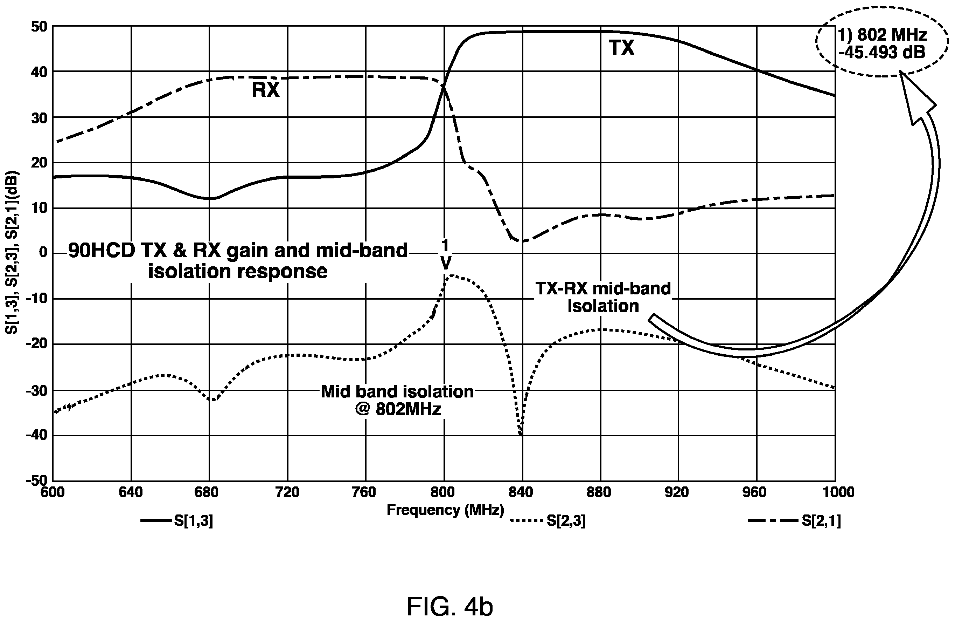

FIG. 4b illustrates a graph showing the Tx and Rx gain and mid-band isolation with a 90 degree hybrid combined duplexer topology, such as the topology illustrated in FIG. 3. As shown in FIG. 4b, the Tx-Rx mid-band isolation for the Band 12 / Band 13 signal duplexed with a Band 26 signal in the topology of FIG. 3 is approximately 45.5 dB at 802 MHz, an improvement of 37.1 dB in isolation over the topology of FIG. 2.

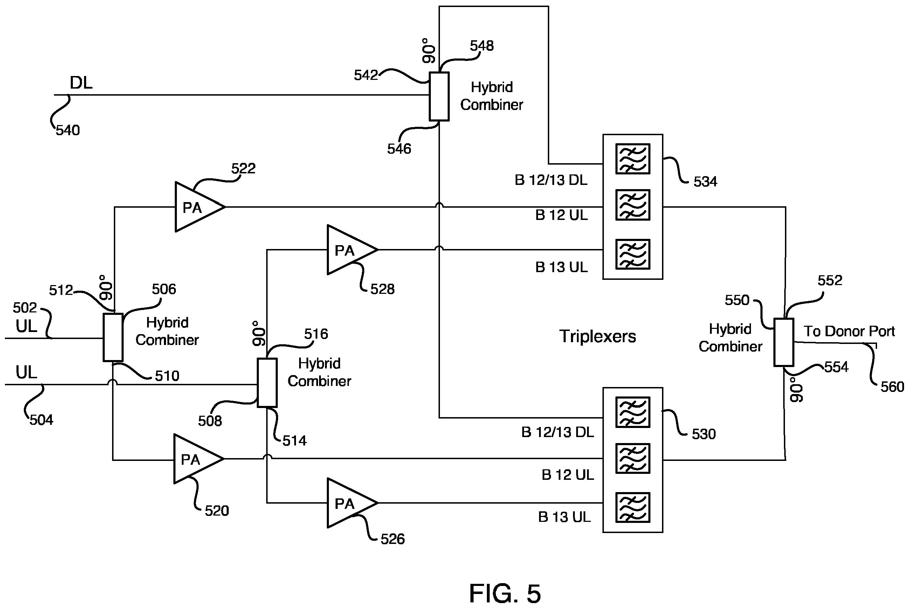

FIG. 5 illustrates a block diagram of a power splitting topology using hybrid combiners for three separate frequency ranges. The frequency ranges can be radio frequency ranges, such as bands or channels. In one example, a first frequency range can be associated with a 3GPP LTE band 12 (729 MHz to 746 MHz) downlink frequency range and band 13 (746 MHz to 756 MHz) downlink frequency range combined (729 MHz to 756 MHz). A second frequency range is associated with a 3GPP band 12 UL frequency range (699 MHz to 716 MHz). A third frequency range is associated with a 3GPP band 13 UL frequency range (777 MHz to 787 MHz). FIG. 5 illustrates the donor port of a repeater, with a UL output at the donor port, and a DL input at the donor port. Power amplifiers (PAs) and filters for B12/B13 are used in the split topology. The gain of each PA can be balanced so that the power of each UL signal entering both triplexers are substantially equal.

In the example of FIG. 5, a first path 502 for one frequency range (i.e. the second frequency range) and a second path 504 for another frequency range (i.e. the third frequency range) can be connected to a first hybrid combiner 506 and a second hybrid combiner 508 respectively. Each hybrid combiner 506, 508 can be configured to split the input signal 502, 504 into a first output port 510, 514 with a 0 degree phase shift relative to the input signal, and a second output port 512, 516 with a 90 degree phase shift relative to the input port. As in FIG. 3, the power amplifiers 520, 522 are located after the hybrid combiner 506 for the second frequency range (i.e. B12 UL) and the power amplifiers 526, 528 are located after the hybrid combiner 508 for the third frequency range (i.e. B13 UL).

In the example of FIG. 5, the first output port 510 of the first hybrid combiner 506 is connected to a first power amplifier 520 and the B12 UL port of a first triplexer 530. The second output port 512 of the first hybrid combiner 506 is connected to a second power amplifier 522 and the B12 UL port of a second triplexer 534. The first output port 514 of the second hybrid combiner 508 is connected to a third power amplifier 526 and the B13 UL port of the first triplexer 530. The second output port 516 of the second hybrid combiner 508 is connected to a fourth power amplifier 528 and the B13 UL port of the second triplexer 534. A third path 540 (i.e. the first frequency range) can be connected to a third hybrid combiner 542 (i.e. Band 12/13 DL) to combine an output of the first frequency range (i.e. B 12/13 DL signal) from the first triplexer 530 and the second triplexer 534. In this example, an output of the B12/13 DL from the first triplexer 530 is sent to the first port 546 with a 0 degree phase shift (relative to the output of the triplexer) of the third hybrid combiner 542. An output of the B12/13 DL from the second triplexer 534 is sent to the second port 548 of the third hybrid combiner 542 with a 90 degree phase shift relative to the output of the second triplexer 534. The two signals are combined and output at the DL port 540. Each signal sent from (or to) a hybrid combiner relative to the first triplexer 530 is phase shifted by 0 degrees relative to the input signal. Each signal sent from (or to) a hybrid combiner relative to the second triplexer 534 is phase shifted by 90 degrees relative to the other split signal port of each hybrid combiner.

**The** three signals entering/exiting the second triplexer 534 are phase shifted 90 degrees from the same band signals entering the first triplexer 530.

The three ports of the first triplexer 530 and the three ports of the second triplexer 534 are connected to a first port 554 (90 degree phase shift) and a second port 552 (0 degree phase shift) of a fourth hybrid combiner 550, which has an output 560 that is connected to a donor port of the repeater. The fourth hybrid combiner 550 results in signals that are substantially in phase, allowing them to be recombined with minimal loss due to phase difference.

The topology illustrated in FIG. 5 provides similar benefits to the topology of FIG. 3, with twice the power carrying capability of a single triplexer (i.e. half power to the first triplexer and half power to the second triplexer), UL PAs should be positioned before the 1st and 2^{nd} hybrid splitter/combiners 506, 508 to minimize reflection from the filters and hybrid combiners configured to absorb the reflection, and 180 degree phase difference between the UL and DL signals leaking through the triplexers to DL and UL paths respectively provide greater mid-band isolation, and a reduced need for filtering, thereby resulting in lower passband ripple and providing a higher quality output signal at the donor port 560.

**The** RF paths between each of the hybrid combiners can be configured to have a substantially equal length so that the signal can re-combine substantially in phase. In some embodiments, a common direction duplexer can be used instead of a triplexer. In another embodiment, an LNA can be added on the DL path between the triplexer and the hybrid combiners to preserve or improve the system noise figure.

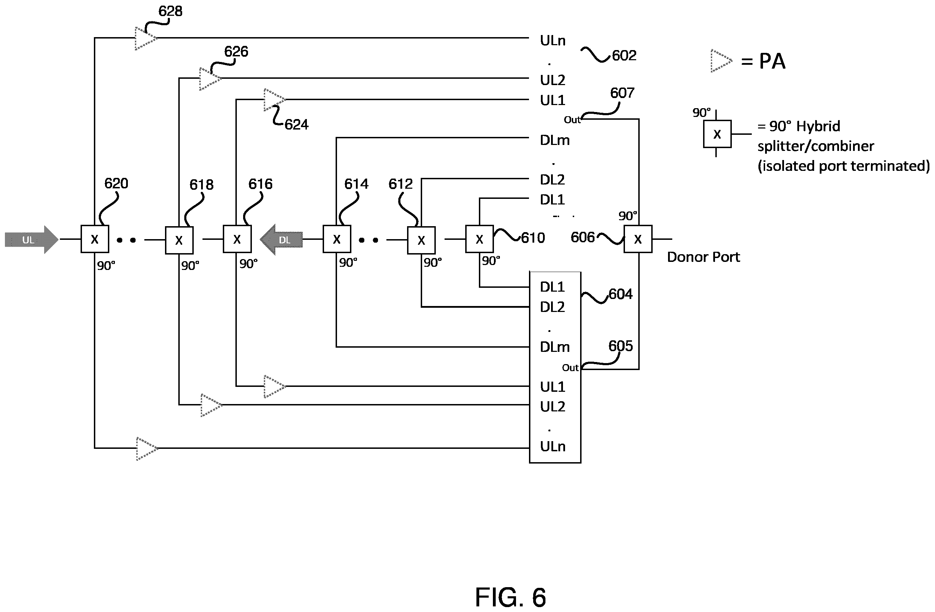

FIG. 6 illustrates a block diagram of a topology for hybrid combining of two parallel N-plexers 602, 604. As illustrated, each N-plexer can be comprised of n first direction signal paths (i.e. UL) and m second direction signal paths (i.e. DL). Accordingly, N is equal to m+n, where m and n are positive integers. There are m + n 90 degree hybrid splitter / combiners 610-620, with m hybrid splitters 610-614 for the first direction signal, n hybrid splitters 616-620 for the second direction signal, and one hybrid combiner 606 used to combine the signals from the first 602 and second 604 N-plexers. Each hybrid splitter/combiner can include an additional isolated port that is terminated.

The value of m can be greater than, less than, or equal to n. For example, there can be more first direction signal paths than second direction signal paths, fewer first direction signal paths than second direction signal paths, or an equal number of first direction signal paths and second direction signal paths. The signals from the hybrid splitters 610-620 that are phase shifted by 90 degrees are each sent to one of the N-plexers 604. The signal from the other N-plexer 602 out port 607 is then shifted by 90 degrees at the donor port hybrid combiner 606 so that the out signals 607, 605 from the two N-plexers 602, 604 are in phase and can be combined.

Optional power amplifiers 624, 626, 628 are illustrated in FIG. 6. As previously discussed, the gain of each PA can be balanced so that the power of each signal output from a hybrid combiner is substantially equal. Low noise amplifiers (LNAs) maybe be added on DL pairs between the combiners and the N-plexers to preserve and/or improve the system noise figure.

One limitation of the use of hybrid combiners is that the repeater system is limited to splitting the power into two equal portions. Accordingly, if the SAW and BAW filters are power limited to about 1 watt of signal power, then a system using a hybrid combiner will be limited to about 2 watts of signal power. A different topology can be used to split a signal into more than two paths, and allow a greater signal power to be output at the donor port, or to be received at the donor port.

**A** Fourier Transform Matrix (FTM) is a passive RF phasing network with n inputs and n outputs used for splitting and coherently combining signals. An FTM ⁽¹⁾ can be represented as an n x n square matrix *Fₙ* with entries given by *Fⱼₖ* = *e*^{*2πjk*/*n*} ≡*ω^{jk}* for *j, k* = 0, 1, 2, ..., n - 1, where i is the imaginary number $\sqrt{- 1} ,$ and normalized by $1 / \sqrt{n}$ to make it unitary.

In one embodiment, when an FTM matrix is connected back to back to its inverse matrix, a signal Xᵢ entering the FTM input matrix appears at the output FTM⁻¹ matrix as Yⱼ; all other signals X are suppressed at the Yⱼ output to the extent of the FTM system crosstalk capability. This is demonstrated by the following FTM system Transfer Functions: *FTM* ∗ *FTM*⁻¹ = 1 (*insertion loss*); *i* = *j*; and $FTM ∗ {FTM}^{- 1} ∼ 0 \left(crosstalk\right) ; i \neq j .$ With all other signals suppressed at the output, the result is a combined signal at the output with minimal interference.

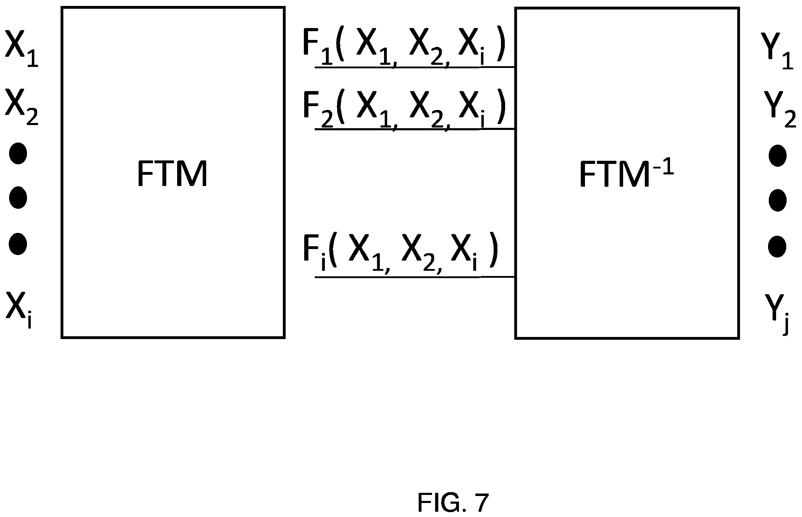

FIG. 7 illustrates an example of a Fourier transform matrix (FTM) combining system. In one example shown in FIG. 7, an FTM matrix can be cascaded with its inverse matrix, FTM⁻¹. A complex signal **X**₁ (represented by a magnitude and a phase) entering the input FTM matrix at a single port has its total power evenly split between all of the input FTM's output ports, but each split signal has a different phase relative to each other. The **X**₁ split signals at each output port of the FTM, having the same magnitude but different phases relative to each other, are then applied to the input ports of the inverse FTM⁻¹ where they are combined within the FTM⁻¹ and emerge at a single FTM⁻¹ output port as signal **Y**₁ with no other signals associated with X₁ appearing at any of the other FTM⁻¹ output ports. Similarly, the single input **X**₂ applied to the input FTM has its total power evenly split between all of the input FTM's output ports. The split **X**₂ signals at the output ports of the FTM, having the same power but different phases, are then applied to the input ports of the inverse FTM⁻¹ where they are combined within the FTM⁻¹ and emerge at a single FTM⁻¹ output port as signal **Y**₂ with no other signals associated with X₂ appearing at any of the other FTM⁻¹ output ports.. Similarly, the single input **X**ᵢ applied to the input FTM has its total power evenly split between all of the input FTM's output ports. The split **X**ᵢ signals at the output ports of the FTM, having the same power but different phases, are then applied to the input ports of the inverse FTM⁻¹ where they are combined within the FTM⁻¹ and emerge at a single FTM⁻¹ output port as signal **Y**ᵢ with no other signals associated with Xᵢ appearing at any of the other FTM⁻¹ output ports. Futhermore, all input signals **X**₁ to **X**ᵢ simultaneously applied to the respective ports of the input FTM, as in FIG. 7, result in outputs F₁(**X**₁, **X**₂, **X**ᵢ) to Fᵢ(**X**₁, **X**₂, **X**ᵢ) which are then input to FTM⁻¹, with resulting FTM⁻¹ outputs of **Y**₁ to **Y**ᵢ.

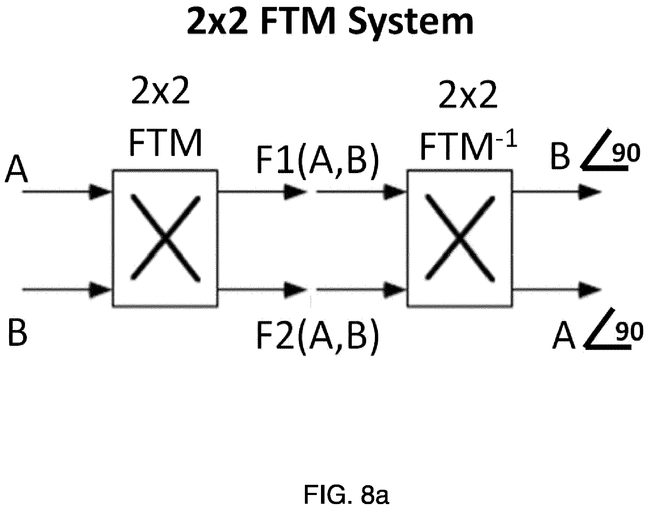

FIG. 8a illustrates an example of a 2x2 FTM system. A complex signal **A** (represented by a magnitude and a phase) entering the input FTM matrix at a single port has its total power evenly split between the two input FTM's output ports, but each split signal has a different phase relative to each other. The **A** split signals at each output port of the FTM, having the same magnitude but different phases relative to each other, are then applied to the input ports of the inverse FTM⁻¹ where they are combined within the FTM⁻¹ and emerge at a single FTM⁻¹ output port as signal **B** with a phase shift of 90 degrees relative to the input signal. Similarly, the complex signal **B** entering the input FTM matrix at the bottom port has its total power evenly split between the two output ports. The inputs to the inverse FTM⁻¹ are F1(A,B) and F2(A,B). The output of the bottom port of the inverse FTM⁻¹ matrix is signal **A** with a phase shift of 90 degrees relative to the input signal.

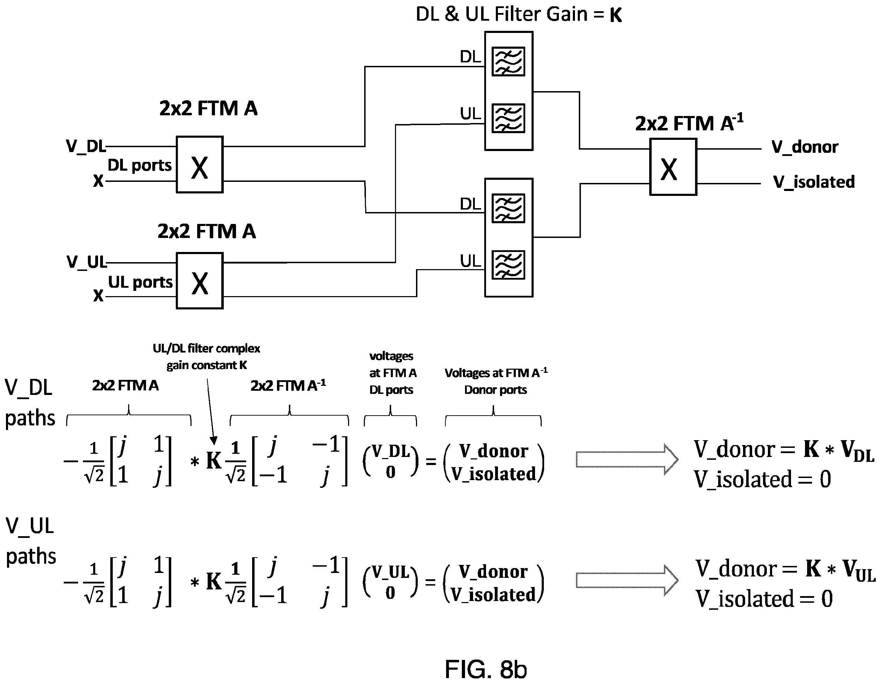

FIG. 8b illustrates a more detailed illustration of the topology of FIG. 8a, using a system of two 2 x 2 FTM matrices with two duplexers. Each FTM A matrix is configured to split an input signal into two paths to allow a signal with up to twice the power to pass through each duplexer. A 2 x 2 inverse FTM A⁻¹ matrix is configured to combine the split signals. Separate path matrix transfer equations relate port voltages V_DL, V_UL, and V_donor, as illustrated. The DL and UL ports labeled **X** are unused and terminated. The 2 x 2 FTM A voltage transfer function, and it's inverse, FTM A⁻¹ are shown in matrix form. The variable j is defined as $\sqrt{- 1} ,$ or equivalently, 1<90. The variable K is the DL and UL filter complex gain for all paths. FIG. 8b illustrates an additional topology that can be used to accomplish the combining of two duplexers onto a single donor port, as illustrated in FIG. 3.

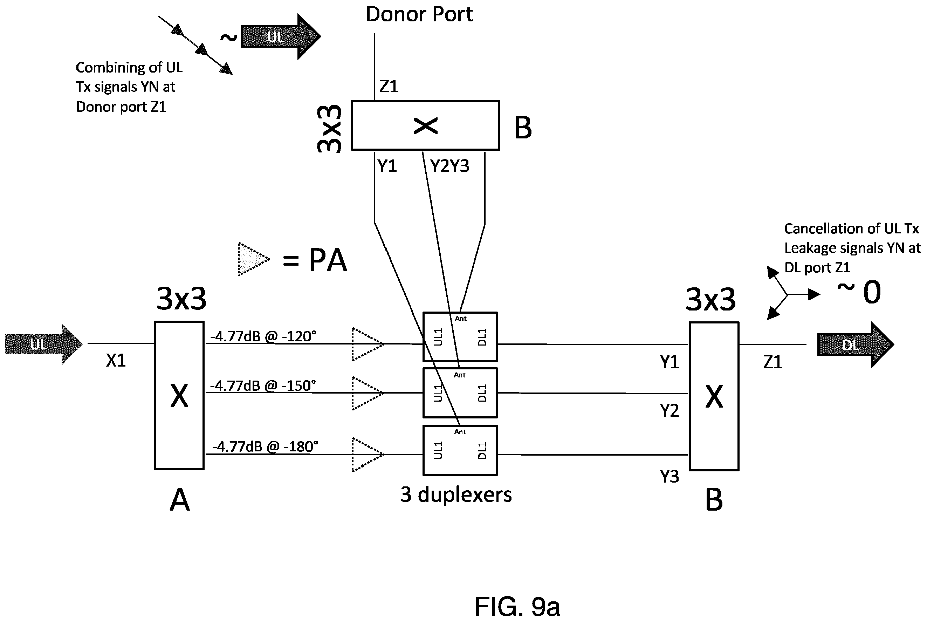

FIG. 9a illustrates an example of an NxN Fourier transform matrix (FTM) combining of N duplexers, where N = 3 to provide an example of a 3x3 FTM system that allows power in two separate frequency bands to be split 3 ways using 3 duplexers. Leakage that occurs in each duplexer, labeled as signals YN, where N = 1 to 3, are canceled at the 3x3 FTM B matrix at DL port Z1. The leakage can be cancelled, as previously discussed in FIG. 3.

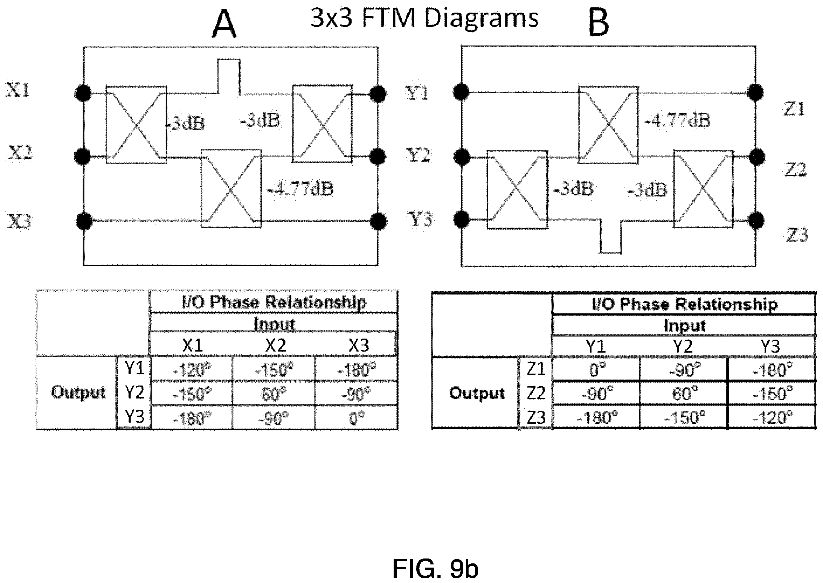

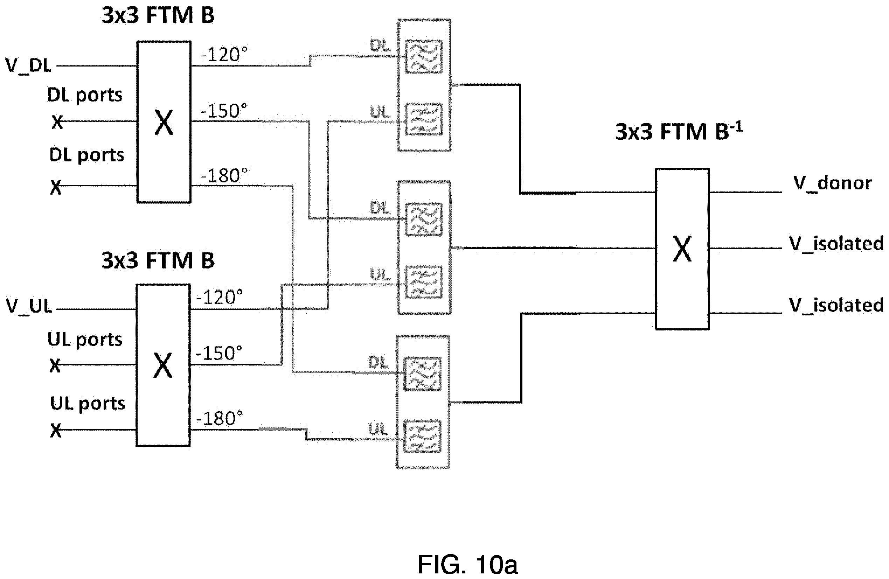

FIG. 9b and FIG. 10a illustrate a more detailed illustration of the topology of FIG. 9a, using a 3 x 3 FTM matrix to split two separate frequency bands into three paths, and a 3 x 3 inverse FTM matrix to combine the split signals. Separate path matrix transfer equations relate port voltages V_DL, V_UL, and V_donor, as illustrated. The 3 x 3 FTMs enable the signal, and therefore the signal power, to be split and sent to 3 separate duplexers. This enables the repeater to transmit and receive up to 3 times the power of a standard repeater using a single duplexer, while still using inexpensive SAW and/or BAW filters in the duplexers. The 3 x 3 FTM B voltage transfer function, and its inverse, FTM B⁻¹ are shown in matrix form in FIG. 9b. FIGs. 9b and 10a illustrate an additional topology that can be used to enable a received signal to be split into three paths and then recombined at a single donor port. The use of the FTM and the inverse FTM allows the signals in the three paths to be recombined in phase, while minimizing interference between the signals in the duplexers. Minimizing interference also provides an increased amount of mid-band isolation between the UL signal and DL signal paths. Greater isolation can allow a reduced amount of filtering, thereby decreasing the amount of ripple in the signal and enabling the repeater to transmit a higher quality signal.

FIG. 10a provides an example illustration of an N x N FTM used to combine N duplexers, where N is a positive integer. An N x N FTM can be used to split/combine an input/output signal, V_DL and/or V_UL, from/to N duplexers to allow the signal power to be split/combined by approximately N times. While duplexers are illustrated in FIG. 10a, they are not intended to be limiting. A plurality of duplexers can be used to split two signals N different ways. Instead of using a duplexer, a plurality of M-plexers can be used to split M signals N different ways, where M is a positive integer. Each of the M signals can represent a desired frequency range, such as a selected frequency band or channel. The number of N FTM ports is equal to the number of duplexers or M-plexers. In general, for N M-plexers, there are M N x N FTMs that are used to divide the signal N ways, and a single N x N inverse FTM that can be used to combine the signal at a port, such as a donor port or a server port. The same N x N matrix can be used in each FTM to split the M signals N different ways.

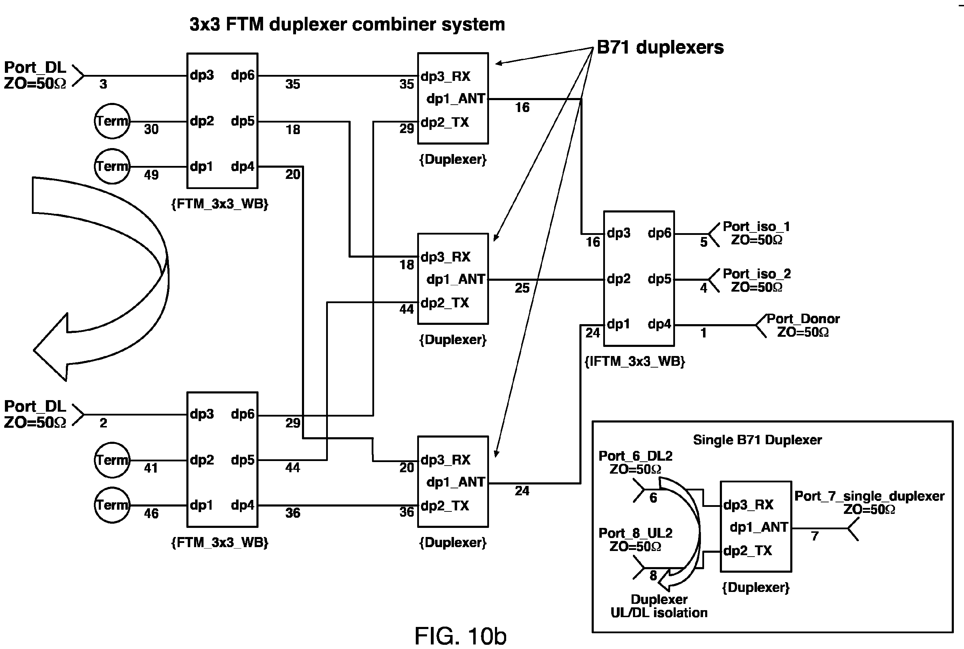

FIG. 10b illustrates an example of a physical implementation of the 3 x 3 FTM illustration of FIG. 10a. In the example of FIG. 10b, a 3x3 FTM combining of three band 71 (B71) duplexers is into a single donor port is illustrated. While B71 is illustrated in this example, it is not intended to be limiting. Any 3GPP band can be divided and combined using the N x N FTM, as previously discussed. In addition, the FTM duplexer combiner system illustrated in FIG. 10b is not limited to a single band. The UL and/or DL signal input at Port 2 or Port 3, respectively, can include multiple bands. In one example, the multiple bands can be adjacent bands, such as B12 DL and B13 DL. The impedance of each port can be configured to match the system impedance. In this example, the impedance Zo is configured to match a system impedance of 50 ohms. However, the system impedance can be another value, as can be appreciated.

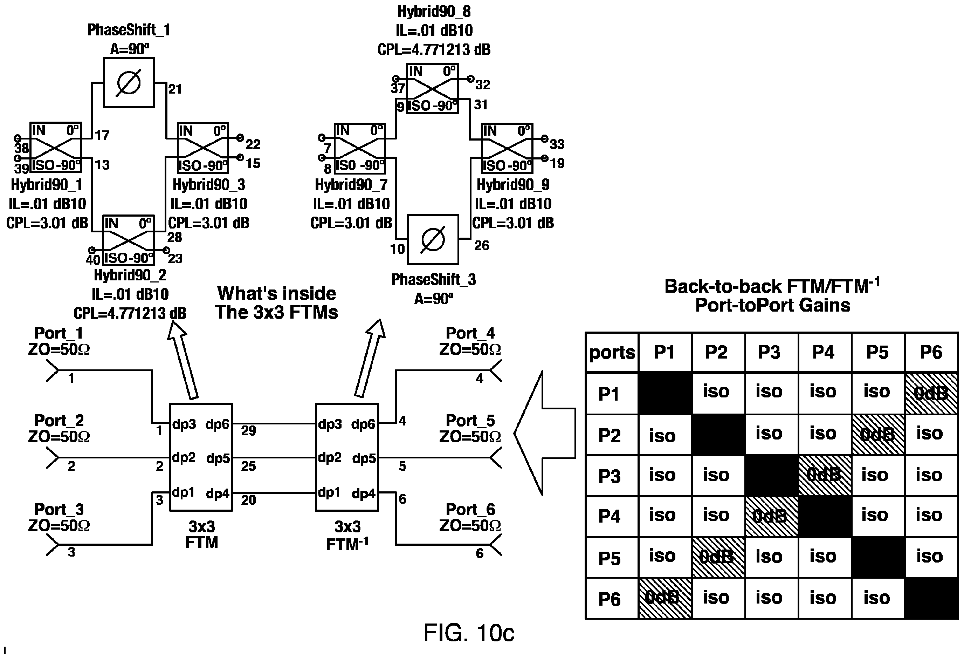

FIG. 10c provides an example implementation of the 3x3 FTMs illustrated in FIG. 10b. In this example, a 3x3 FTM and inverse FTM are formed using 90 degree hybrid splitter/combiners and a 90 degree phase delay. The back to back FTM/Inverse FTM port-to-port gains are also illustrated in a gain table that shows the port-to-port transfer gain. Those ports showing isolated can be isolated or have a large attenuation between the ports. In this example, each of the 90 degree hybrid splitter/combiners have an insertion loss of approximately 0.01 dB and a coupling loss of approximately 3.01 dB. The impedance of the ports on the FTM and inverse FTM are configured to be 50 ohms. These values are listed as examples and are not intended to be limiting.

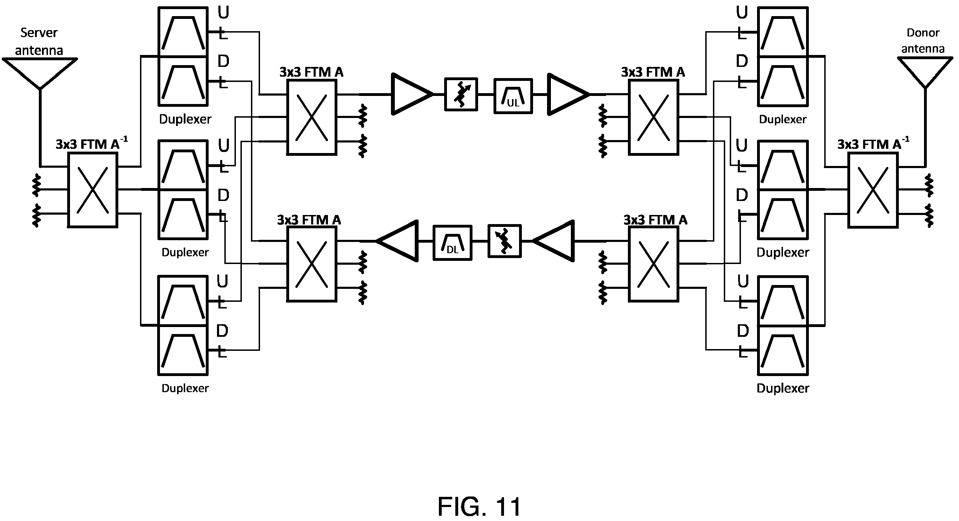

FIG. 11 illustrates an example of a 3x3 FTM repeater topology, for use in a bi-directional repeater. The 3x3 FTM repeater can comprise a first 3x3 inverse FTM A⁻¹. A selected connection of the FTM can be connected to a first input/output port to receive a first direction signal or transmit a second direction signal. The input port can be configured to connect to an antenna, such as a server antenna or donor antenna. The remaining input connections of the FTM can be terminated. The phase and amplitude relationships of the signals input and output from the 3 x 3 FTM A and the 3 x 3 inverse FTM A⁻¹ in the example of FIG. 11 can be the same as illustrated in FIG. 9B. This example is not intended to be limiting. Other FTM functions may also be used to provide a singular output.

The first 3x3 inverse FTM A⁻¹ can have a first output port, a second output port, and a third output port coupled to a first duplexer, a second duplexer and a third duplexer respectively. The first duplexer can have a first output port coupled to a first input port of a first 3x3 FTM A, and a second output coupled to a first output port of a second 3x3 FTM A. The second duplexer can have a first output port coupled to a second input port of the first 3x3 FTM A and a second output port coupled to a second output port of the second 3x3 FTM A. The third duplexer can have a first output port coupled to a third input port of the first 3x3 FTM A, and a second output port coupled to a third output port of the second 3x3 FTM A. The first output port of the first 3x3 FTM A, can be coupled to a first low noise amplifier, a first variable attenuator, a first band pass filter (typically a SAW or BAW filter), a first power amplifier, and first input port of a third 3x3 FTM A. The third 3x3 FTM A, can comprise a first output port coupled to a first input port of a fourth duplexer, a second output port coupled to a first input port of a fifth duplexer, and a third output port coupled to a first input port of a sixth duplexer. The fourth 3x3 FTM A, can comprise a first input port coupled to a second output port of the fourth duplexer, a second input port coupled to a second output port of the fifth duplexer, and a third input port coupled to a second output port of the sixth duplexer. The output port of the fourth 3x3 FTM A is coupled to a second low noise amplifier, a second variable attenuator, a second bandpass filter (typically a SAW or BAW filter), and a second power amplifier and a first input port of the second 3x3 FTM A. A second inverse 3x3 FTM A⁻¹, coupled to second input/output port that is configured to be connected to a server antenna or a donor antenna to transmit a first direction signal or receive a second direction signal. The second inverse 3 x 3 FTM A⁻¹ can comprise a first input/output port coupled to a port of the fourth duplexer, a second input/output port coupled to a port of the fifth duplexer, and a third input/output port coupled to a port of the sixth duplexer.

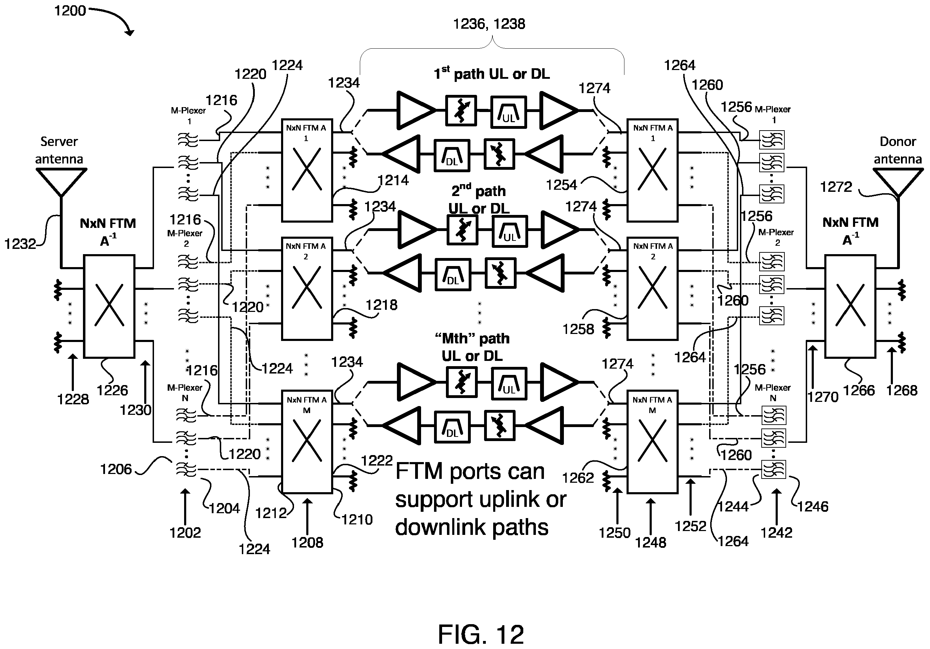

FIG. 12 illustrates the above example from FIG. 11, in a system comprising multiple NxN FTMs that support splitting/combining N M-plexers multiplexed I/O ports, and one inverse FTM to split/combine the N M-plexers' common I/O ports. Each of the M received/transmitted signals can have a specific frequency range, such as a predetermined band or channel. Each of the M N x N FTMs can have the same transfer function. Any unused ports in the N x N FTMs can be terminated, typically with impedance Z₀, such as a 50 ohm impedance or other desired impedance level. Each of the M paths between the server side and the donor side can be an amplification and filtering path for a first direction signal, such as an UL signal, or an amplification and filtering path for a second direction signal, such as a DL signal.

Accordingly, the topology illustrated in FIG. 12 can enable MxN signals from N M-plexers to drive the input of M NxN FTMs. Each of the M paths can be either a first direction signal or a second direction signal -such as uplink or downlink. Each path typically includes a low noise amplifier (LNA), a variable attenuator, a band pass filter, and one or more power amplifiers (PA) or gain blocks. The M paths use M FTMs plus the inverse FTM A⁻¹. The size of the FTM (NxN) is determined by the number of combined M-plexers, which is N in this example.

Using the topology illustrated in FIG. 12, a repeater can be configured to handle up to N times the power for an M band repeater compared to using a single M-plexer alone, while using inexpensive filters, such as SAW or BAW filters for the M-plexer. In addition, signal leakage that may occur in the M-plexers can be substantially cancelled out at the inverse NxN FTM A⁻¹ matrix, providing greater mid-band isolation, and a reduced need for filtering, thereby resulting in lower passband ripple and providing a higher quality output signal at the donor port, as previously discussed.

In one example of FIG. 12, a repeater 1200 having a Fourier Transform Matrix (FTM) combined filters comprises a first set of N M-plexers 1202 having M ports on a first side 1204 of each of the first set of the N M-plexers 1202 and a single port on a second side 1206 of each of the first set of the N M-plexers 1202. In this example, both M and N are positive integers.

**The** repeater 1200 further comprises a first set of M N by N (NxN) FTMs 1208, with each of the M FTMs in the first set 1208 having N first side ports 1210 and N second side ports 1212. The N second side ports 1212 of a first N x N FTM 1214 of the first set 1208 are connected to a first selected port 1216 of the first side 1204 of each of the first set of N M-plexers 1202, respectively. The N second side ports 1212 of a second N x N FTM 1218 of the first set 1208 are connected to a second selected port 1220 of the first side 1204 of each of the first set of N M-plexers 1202, respectively. The N second side ports 1212 of an Mth N x N FTM 1222 of the first set 1208 are connected to an Mth selected port 1224 of the first side 1204 of each of the first set of the N M-plexers 1202, respectively.

The repeater 1200 further comprises a first inverse NxN FTM 1226 comprising N first side ports 1228 and N second side ports 1230. A single port of the second side 1206 of each of the first set of the N M-plexers 1202 is connected to one of the N second side ports 1230 of the first inverse NxN FTM 1226.

The repeater 1200 further comprises an antenna port 1232 coupled to a Pth port 1232 of a first side of the first inverse NxN FTM 1226. In this example, P is an integer from 1 to N. The antenna port is configured to communicate M signals, via an antenna configured to be coupled to the antenna port 1232. Each of the M signals can have a first direction (i.e. uplink or downlink) or a second direction (i.e. downlink or uplink).

**The** repeater 1200 further comprises a signal port at the Pth port 1234 of a first side of each of the M NxN FTMs in the first set 1208. The signal port is configured to communicate one of the M signals in the first direction or the second direction.

The repeater 1200 can further comprise M first direction signal chains 1236 coupled to the signal port at the Pth port 134 of the first side of each of the M N x N FTMs in the first set 1208, respectively. The repeater may also include M second direction signal chains 1238 coupled to the signal port at the Pth port 1234 of the first side of each of the M NxN FTMs in the first set 1208, respectively.

**The** repeater 1200 can further comprise a second set of N M-plexers 1242 having M ports on a first side 1244 of each of the second set of N M-plexers 1242 and a single port on a second side 1246 of each of the second set of N M-plexers 1242.

The repeater 1200 can further comprise a second set of M N by N (NxN) FTMs 1248, with each of the M FTMs having N first side ports 1250 and N second side ports 1252. The N second side ports 1252 of a first NxN FTM 1254 in the second set 1248 are connected to a first selected port 1256 of the first side 1244 of each of the second set of N M-plexers 1242, respectively. The N second side ports 1252 of a second NxN FTM 1258 in the second set 1248 are connected to a second selected port 1260 of the first side 1244 of each of the second set of N M-plexers 1242, respectively. The N second side ports 1252 of an Mth NxN FTM 1262 in the second set 1248 are connected to an Mth selected port 1264 of the first side 1244 of each of the second set of N M-plexers 1242, respectively.

The repeater 1200 can further comprise a second inverse NxN FTM 1266 comprising N first side ports 1268 and N second side ports 1270, wherein the single port of the second side 1246 of each of the second set of N M-plexers 1242 is connected to one of the N second side ports 1270 of the second inverse NxN FTM 1266.

The repeater 1200 can further comprise a second antenna port 1272 coupled to an Rth port of a first side of the second inverse NxN FTM 1266, wherein R is an integer from 1 to N. The second antenna port 1272 is configured to communicate, via a second antenna, the M signals.

**The** repeater 1200 can further comprise a signal port 1274 at the Rth port of a first side of each of the second set of M NxN FTMs 1248. The signal port 1274 is configured to communicate one of the M signals in the first direction or the second direction. In one example, the M first direction signal chains 1236 are coupled to the signal port 1274 at the Rth port of a first side each of each of the second set of M NxN FTMs 1248, respectively. In another example, the M second direction signal chains 1238 are coupled to the signal port 1274 at the Rth port of the first side of each of each of the second set of the M NxN FTMs 1248, respectively.

In one example, the remaining ports of the N ports of the first side of the first set of M NxN FTMs 1208 can be terminated with a system impedance. The remaining ports of the N ports of the second side of the first inverse NxN FTM 1226 can be terminated with a system impedance. The remaining ports of the N ports of the first side of the second set of M NxN FTMs 1248 can be terminated with a system impedance. The remaining ports of the N ports of the second side of the second inverse NxN FTM 1266 can be terminated with a system impedance.

In one embodiment, N can be equal to 3 in the example off FIG. 12. A voltage transfer function for N=3 for the first set of M NxN FTMs and the first inverse NxN FTM, for the first direction is: $- \frac{1}{\sqrt{3}} B ∗ K \frac{1}{\sqrt{3}} {B}^{- 1} \left(\begin{matrix}V_UL \\ 0 \\ 0\end{matrix}\right) = \left(\begin{matrix}V_donor \\ V_isolated \\ V_isolated\end{matrix}\right)$ wherein B is $\left[\begin{matrix}{/ - 120}_{̲} & {/ - 150}_{̲} & {/ - 180}_{̲} \\ {/ - 150}_{̲} & {/ 60}_{̲} & {/ - 90}_{̲} \\ {/ - 180}_{̲} & {/ - 90}_{̲} & {/ 0}_{̲}\end{matrix}\right]$ for each of the first set of M N x N FTMs, **B⁻¹** is $\left[\begin{matrix}{/ 0}_{̲} & {/ - 90}_{̲} & {/ - 180}_{̲} \\ {/ - 90}_{̲} & {/ 60}_{̲} & {/ - 150}_{̲} \\ {/ - 180}_{̲} & {/ - 150}_{̲} & {/ - 120}_{̲}\end{matrix}\right]$ for the first inverse NxN FTM, K is a complex gain for all paths in the first inverse NxN FTM, V_UL is a voltage at the signal port at the Pth port 1234 of the first side of each of the M NxN FTMs in the first set 1208, and V_donor is a voltage at the Pth port 1232 of the second side of the first inverse NxN FTM 1226, and V_isolated is a voltage at the remaining ports of the second side of the first inverse NxN FTM 1226.

A voltage transfer function for N=3 for the second set of M NxN FTMs 1248 and the second inverse NxN FTM 1266, for the second direction is: $- \frac{1}{\sqrt{3}} B ∗ K \frac{1}{\sqrt{3}} {B}^{- 1} \left(\begin{matrix}V_UL \\ 0 \\ 0\end{matrix}\right) = \left(\begin{matrix}V_donor \\ V_isolated \\ V_isolated\end{matrix}\right)$ wherein B is $\left[\begin{matrix}{/ - 120}_{̲} & {/ - 150}_{̲} & {/ - 180}_{̲} \\ {/ - 150}_{̲} & {/ 60}_{̲} & {/ - 90}_{̲} \\ {/ - 180}_{̲} & {/ - 90}_{̲} & {/ 0}_{̲}\end{matrix}\right]$ for each of the second set of M N x N FTMs 1248, **B⁻¹** is $\left[\begin{matrix}{/ 0}_{̲} & {/ - 90}_{̲} & {/ - 180}_{̲} \\ {/ - 90}_{̲} & {/ 60}_{̲} & {/ - 150}_{̲} \\ {/ - 180}_{̲} & {/ - 150}_{̲} & {/ - 120}_{̲}\end{matrix}\right]$ for the second inverse NxN FTM 1266, K is a complex gain for all paths in the second inverse NxN FTM 1266, V_DL is a voltage at the signal port at the Rth port 1274 of the first side of each of the second set of M NxN FTMs 1248, and V_donor is a voltage at the Rth port 1272 of the second side of the second inverse NxN FTM 1266, and V_isolated is a voltage at the remaining ports of the second side of the second inverse NxN FTM 1266.

In another embodiment, N can be set to two in the example of FIG. 12. A voltage transfer function for N=2 for the first set of M NxN FTMs 1208 and the first inverse NxN FTM 1226, for the first direction is: $- \frac{1}{\sqrt{2}} B ∗ K \frac{1}{\sqrt{2}} {B}^{- 1} \left(\begin{matrix}V_UL \\ 0\end{matrix}\right) = \left(\begin{matrix}V_donor \\ V_isolated\end{matrix}\right) ,$ wherein B is $\left[\begin{matrix}j & 1 \\ 1 & j\end{matrix}\right]$ for each of the second set of M N x N FTMs 1248, **B⁻¹** is $\left[\begin{matrix}j & - 1 \\ - 1 & j\end{matrix}\right]$ for the second inverse NxN FTM 1266, j is equal to $\sqrt{- 1} ,$ K is a complex gain for all paths in the first inverse NxN FTM 1226, V_UL is a voltage at the signal port at the Pth port 1234 of the first side of each of the M NxN FTMs in the first set 1208, and V_donor is a voltage at the Pth port 1232 of the second side of the first inverse NxN FTM 1226, and V_isolated is a voltage at the remaining ports of the second side of the first inverse NxN FTM 1226.

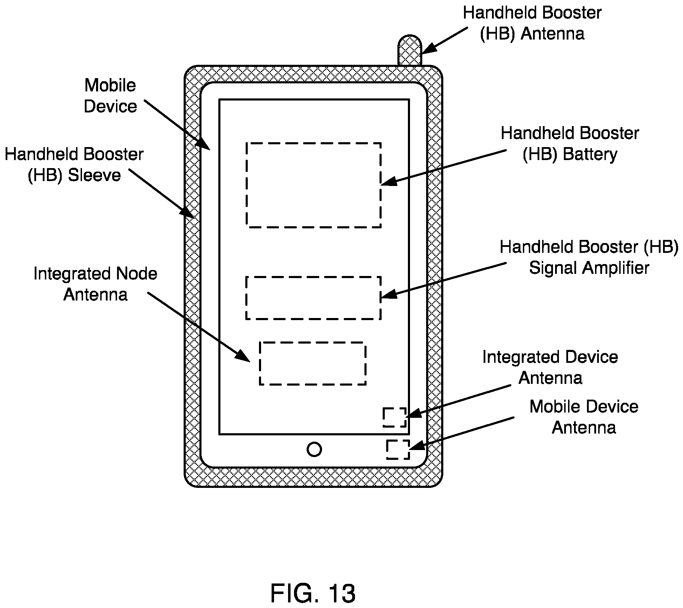

A voltage transfer function for N=2 for the second set of M NxN FTMs 1248 and the second inverse NxN FTM 1266, for the second direction is: $- \frac{1}{\sqrt{2}} B ∗ K \frac{1}{\sqrt{2}} {B}^{- 1} \left(\begin{matrix}V_UL \\ 0\end{matrix}\right) = \left(\begin{matrix}V_donor \\ V_isolated\end{matrix}\right) ,$ wherein **B** is $\left[\begin{matrix}j & 1 \\ 1 & j\end{matrix}\right]$ for each of the second set of M N x N FTMs 1248, **B⁻¹** is $\left[\begin{matrix}j & - 1 \\ - 1 & j\end{matrix}\right]$ for the second inverse NxN FTM 1266, j is equal to $\sqrt{- 1} ,$ K is a complex gain for all paths in the second inverse NxN FTM, V_DL is a voltage at the signal port at the Rth port 1274 of the first side of each of the second set of M NxN FTMs 1248, and V_donor is a voltage at the Rth port 1272 of the second side of the second inverse NxN FTM 1266, and V_isolated is a voltage at the remaining ports of the second side of the second inverse NxN FTM 1266.While various embodiments described herein, and illustrated in FIGS. 1-12, have been described with respect to a cellular signal amplifier with an outside antenna and an inside antenna, this is not intended to be limiting. A Parallel Filter for power distribution can also be accomplished using a handheld booster as illustrated in FIG. 13. The handheld booster can include an integrated device antenna and an integrated node antenna that are typically used in place of the indoor antenna and outdoor antenna, respectively.

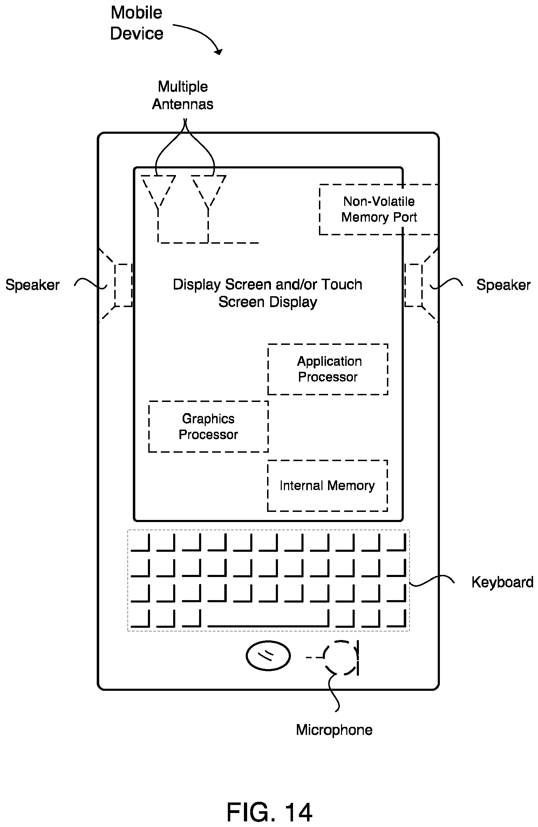

FIG. 14 provides an example illustration of the wireless device, such as a user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband processing unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard such as, but not limited to, 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The wireless device can also comprise a wireless modem. The wireless modem can comprise, for example, a wireless radio transceiver and baseband circuitry (e.g., a baseband processor). The wireless modem can, in one example, modulate signals that the wireless device transmits via the one or more antennas and demodulate signals that the wireless device receives via the one or more antennas.

FIG. 14 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

Various techniques, or certain aspects or portions thereof, can take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. Circuitry can include hardware, firmware, program code, executable code, computer instructions, and/or software. A non-transitory computer readable storage medium can be a computer readable storage medium that does not include signal. In the case of program code execution on programmable computers, the computing device can include a processor, a storage medium readable by the processor (including volatile and non-volatile memory and/or storage elements), at least one input device, and at least one output device. The volatile and non-volatile memory and/or storage elements can be a random-access memory (RAM), erasable programmable read only memory (EPROM), flash drive, optical drive, magnetic hard drive, solid state drive, or other medium for storing electronic data. The low energy fixed location node, wireless device, and location server can also include a transceiver module (i.e., transceiver), a counter module (i.e., counter), a processing module (i.e., processor), and/or a clock module (i.e., clock) or timer module (i.e., timer). One or more programs that can implement or utilize the various techniques described herein can use an application programming interface (API), reusable controls, and the like. Such programs can be implemented in a high level procedural or object oriented programming language to communicate with a computer system. However, the program(s) can be implemented in assembly or machine language, if desired. In any case, the language can be a compiled or interpreted language, and combined with hardware implementations.

As used herein, the term processor can include general purpose processors, specialized processors such as VLSI, FPGAs, or other types of specialized processors, as well as base band processors used in transceivers to send, receive, and process wireless communications.

It should be understood that many of the functional units described in this specification have been labeled as modules, in order to more particularly emphasize their implementation independence. For example, a module can be implemented as a hardware circuit comprising custom very-large-scale integration (VLSI) circuits or gate arrays, off-the-shelf semiconductors such as logic chips, transistors, or other discrete components. A module can also be implemented in programmable hardware devices such as field programmable gate arrays, programmable array logic, programmable logic devices or the like.

In one example, multiple hardware circuits or multiple processors can be used to implement the functional units described in this specification. For example, a first hardware circuit or a first processor can be used to perform processing operations and a second hardware circuit or a second processor (e.g., a transceiver or a baseband processor) can be used to communicate with other entities. The first hardware circuit and the second hardware circuit can be incorporated into a single hardware circuit, or alternatively, the first hardware circuit and the second hardware circuit can be separate hardware circuits.

Modules can also be implemented in software for execution by various types of processors. An identified module of executable code can, for instance, comprise one or more physical or logical blocks of computer instructions, which can, for instance, be organized as an object, procedure, or function. Nevertheless, the executables of an identified module need not be physically located together, but can comprise disparate instructions stored in different locations which, when joined logically together, comprise the module and achieve the stated purpose for the module.

Indeed, a module of executable code can be a single instruction, or many instructions, and can even be distributed over several different code segments, among different programs, and across several memory devices. Similarly, operational data can be identified and illustrated herein within modules, and can be embodied in any suitable form and organized within any suitable type of data structure. The operational data can be collected as a single data set, or can be distributed over different locations including over different storage devices, and can exist, at least partially, merely as electronic signals on a system or network. The modules can be passive or active, including agents operable to perform desired functions.

Reference throughout this specification to "an example" or "exemplary" means that a particular feature, structure, or characteristic described in connection with the example is included in at least one embodiment of the present invention. Thus, appearances of the phrases "in an example" or the word "exemplary" in various places throughout this specification are not necessarily all referring to the same embodiment.

As used herein, a plurality of items, structural elements, compositional elements, and/or materials can be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention can be referred to herein along with alternatives for the various components thereof. It is understood that such embodiments, examples, and alternatives are not to be construed as defacto equivalents of one another, but are to be considered as separate and autonomous representations of the present invention.

Furthermore, the described features, structures, or characteristics can be combined in any suitable manner in one or more embodiments. In the following description, numerous specific details are provided, such as examples of layouts, distances, network examples, etc., to provide a thorough understanding of embodiments of the invention. One skilled in the relevant art will recognize, however, that the invention can be practiced without one or more of the specific details, or with other methods, components, layouts, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A repeater having Fourier Transform Matrix (FTM) combined filters, the repeater comprising:
a first set of N M-plexers having M ports on a first side of each of the first set of the N M-plexers and a single port on a second side of each of the first set of the N M-plexers, where N is a positive integer and M is a positive integer;
a first set of M N by N (NxN) FTMs, with each of the M FTMs in the first set having N first side ports and N second side ports, wherein:
the N second side ports of a first NxN FTM of the first set are connected to a first selected port of the first side of each of the first set of the N M-plexers, respectively;
the N second side ports of a second NxN FTM of the first set are connected to a second selected port of the first side of each of the first set of the N M-plexers, respectively;
the N second side ports of a Mth NxN FTM of the first set are connected to an Mth selected port of the first side of each of the first set of the N M-plexers, respectively;
a first inverse NxN FTM comprising N first side ports and N second side ports, wherein a single port of the second side of each of the first set of the N M-plexers is connected to one of the N second side ports of the first inverse NxN FTM;
an antenna port coupled to a Pth port of a first side of the first inverse NxN FTM, wherein P is an integer from 1 to N, wherein the antenna port is configured to communicate, via an antenna, M signals, with each of the M signals having a first direction or a second direction; and
a signal port at the Pth port of a first side of each of the M NxN FTMs in the first set, wherein the signal port is configured to communicate one of the M signals in the first direction or the second direction.

2. The repeater of claim 1, wherein the first direction is an uplink signal or the second direction is a downlink signal.

3. The repeater of either claim 1 or claim 2, further comprising:
M first direction signal chains coupled to the signal port at the Pth port of the first side of each of the M NxN FTMs in the first set, respectively; or
M second direction signal chains coupled to the signal port at the Pth port of the first side of each of each of the M NxN FTMs in the first set, respectively.

4. The repeater of claim 3, wherein the M first direction signal chains and the M second direction signal chains further comprise one or more of:
a low noise amplifier (LNA);
a variable attenuator;
a power amplifier (PA);
a circulator; and
a band-pass filter configured for one of the M signals in a first direction or a second direction.

5. The repeater of claim 4, further comprising:
a second set of N M-plexers having M ports on a first side of each of the second set of N M-plexers and a single port on a second side of each of the second set of N M-plexers;
a second set of M N by N (NxN) FTMs, with each of the M FTMs having N first side ports and N second side ports, wherein:
the N second side ports of a first NxN FTM in the second set are connected to a first selected port of the first side of each of the second set of N M-plexers, respectively;
the N second side ports of a second NxN FTM in the second set are connected to a second selected port of the first side of each of the second set of N M-plexers, respectively;
the N second side ports of a Mth NxN FTM in the second set are connected to an Mth selected port of the first side of each of the second set of N M-plexers, respectively;
a second inverse NxN FTM comprising N first side ports and N second side ports, wherein the single port of the second side of each of the second set of N M-plexers is connected to one of the N second side ports of the second inverse NxN FTM;
a second antenna port coupled to a Rth port of a first side of the second inverse NxN FTM, wherein R is an integer from 1 to N, wherein the second antenna port is configured to communicate, via a second antenna, the M signals; and
a signal port at the Rth port of a first side of each of the second set of M NxN FTMs, wherein the signal port is configured to communicate one of the M signals in the first direction or the second direction.

6. The repeater of claim 5, wherein:
the M first direction signal chains are coupled to the signal port at the Rth port of a first side each of each of the second set of M NxN FTMs, respectively; or
the M second direction signal chains are coupled to the signal port at the Rth port of the first side of each of each of the second set of the M NxN FTMs, respectively.

7. The repeater of any one of the preceding claims, wherein remaining ports of the N ports of the first side of the first set of M NxN FTMs are terminated with a system impedance.

8. The repeater of any one of the preceding claims, wherein remaining ports of the N ports of the second side of the first inverse NxN FTM are terminated with a system impedance.

9. The repeater of claim 5, wherein remaining ports of the N ports of the first side of the second set of M NxN FTMs are terminated with a system impedance.

10. The repeater of claim 5, wherein remaining ports of the N ports of the second side of the second inverse NxN FTM are terminated with a system impedance.

11. The repeater of claim 5, wherein N=3.

12. The repeater of claim 11, wherein a voltage transfer function for N=3 for the first set of M NxN FTMs and the first inverse NxN FTM, for the first direction is: $- \frac{1}{\sqrt{3}} B ∗ K \frac{1}{\sqrt{3}} {B}^{- 1} \left(\begin{matrix}V_UL \\ 0 \\ 0\end{matrix}\right) = \left(\begin{matrix}V_donor \\ V_isolated \\ V_isolated\end{matrix}\right)$ wherein **B** is $\left[\begin{matrix}{/ - 120}_{̲} & {/ - 150}_{̲} & {/ - 180}_{̲} \\ {/ - 150}_{̲} & {/ 60}_{̲} & {/ - 90}_{̲} \\ {/ - 180}_{̲} & {/ - 90}_{̲} & {/ 0}_{̲}\end{matrix}\right]$ for each of the first set of M N x N FTMs, **B⁻¹** is $\left[\begin{matrix}{/ 0}_{̲} & {/ - 90}_{̲} & {/ - 180}_{̲} \\ {/ - 90}_{̲} & {/ 60}_{̲} & {/ - 150}_{̲} \\ {/ - 180}_{̲} & {/ - 150}_{̲} & {/ - 120}_{̲}\end{matrix}\right]$ for the first inverse NxN FTM, K is a complex gain for all paths in the first inverse NxN FTM, V_UL is a voltage at the signal port at the Pth port of the first side of each of the M NxN FTMs in the first set, and V_donor is a voltage at the Pth port of the second side of the first inverse NxN FTM, and V_isolated is a voltage at the remaining ports of the second side of the first inverse NxN FTM.

13. The repeater of claim 11, wherein a voltage transfer function for N=3 for the second set of M NxN FTMs and the second inverse NxN FTM, for the second direction is: $- \frac{1}{\sqrt{3}} B ∗ K \frac{1}{\sqrt{3}} {B}^{- 1} \left(\begin{matrix}V_UL \\ 0 \\ 0\end{matrix}\right) = \left(\begin{matrix}V_donor \\ V_isolated \\ V_isolated\end{matrix}\right)$ wherein **B** is $\left[\begin{matrix}{/ - 120}_{̲} & {/ - 150}_{̲} & {/ - 180}_{̲} \\ {/ - 150}_{̲} & {/ 60}_{̲} & {/ - 90}_{̲} \\ {/ - 180}_{̲} & {/ - 90}_{̲} & {/ 0}_{̲}\end{matrix}\right]$ for each of the second set of M N x N FTMs, **B⁻¹** is $\left[\begin{matrix}{/ 0}_{̲} & {/ - 90}_{̲} & {/ - 180}_{̲} \\ {/ - 90}_{̲} & {/ 60}_{̲} & {/ - 150}_{̲} \\ {/ - 180}_{̲} & {/ - 150}_{̲} & {/ - 120}_{̲}\end{matrix}\right]$ for the second inverse NxN FTM, K is a complex gain for all paths in the second inverse NxN FTM, V_DL is a voltage at the the signal port at the Rth port of the first side of each of the second set of M NxN FTMs, and V_donor is a voltage at the Rth port of the second side of the second inverse NxN FTM, and V_isolated is a voltage at the remaining ports of the second side of the second inverse NxN FTM.

14. The repeater of claim 5, wherein N = 2 and a voltage transfer function for N=2 for the first set of M NxN FTMs and the first inverse NxN FTM, for the first direction is: $- \frac{1}{\sqrt{2}} B ∗ K \frac{1}{\sqrt{2}} {B}^{- 1} \left(\begin{matrix}V_UL \\ 0\end{matrix}\right) = \left(\begin{matrix}V_donor \\ V_isolated\end{matrix}\right) ,$ wherein **B** is $\left[\begin{matrix}j & 1 \\ 1 & j\end{matrix}\right]$ for each of the second set of M N x N FTMs, **B⁻¹** is $\left[\begin{matrix}j & - 1 \\ - 1 & j\end{matrix}\right]$ for the second inverse NxN FTM, j is equal to $\sqrt{- 1} ,$ K is a complex gain for all paths in the first inverse NxN FTM, V_UL is a voltage at the signal port at the Pth port of the first side of each of the M NxN FTMs in the first set, and V_donor is a voltage at the Pth port of the second side of the first inverse NxN FTM, and V_isolated is a voltage at the remaining ports of the second side of the first inverse NxN FTM.

15. The repeater of claim 5, wherein a voltage transfer function for N=2 for the second set of M NxN FTMs and the second inverse NxN FTM, for the second direction is: $- \frac{1}{\sqrt{2}} B ∗ K \frac{1}{\sqrt{2}} {B}^{- 1} \left(\begin{matrix}V_UL \\ 0\end{matrix}\right) = \left(\begin{matrix}V_donor \\ V_isolated\end{matrix}\right) ,$ wherein B is $\left[\begin{matrix}j & 1 \\ 1 & j\end{matrix}\right]$ for each of the second set of M N x N FTMs, **B⁻¹** is $\left[\begin{matrix}j & - 1 \\ - 1 & j\end{matrix}\right]$ for the second inverse NxN FTM, j is equal to 8$\sqrt{- 1} ,$ K is a complex gain for all paths in the second inverse NxN FTM, V_DL is a voltage at the the signal port at the Rth port of the first side of each of the second set of M NxN FTMs, and V_donor is a voltage at the Rth port of the second side of the second inverse NxN FTM, and V_isolated is a voltage at the remaining ports of the second side of the second inverse NxN FTM.
